(19) Europäisches Patentamt / European Patent Office / Office européen des brevets

(11) **EP 4 380 004 A1**

(12) **EUROPEAN PATENT APPLICATION**
published in accordance with Art. 153(4) EPC

(43) Date of publication:
**05.06.2024 Bulletin 2024/23**

(21) Application number: **22852605.9**

(22) Date of filing: **31.03.2022**

(51) International Patent Classification (IPC):
**H02J 50/05** *(2016.01)*          **H02J 7/00** *(2006.01)*

(52) Cooperative Patent Classification (CPC):
**H02J 7/00; H02J 50/05;** Y02E 60/10

(86) International application number:
**PCT/JP2022/016476**

(87) International publication number:
**WO 2023/013176 (09.02.2023 Gazette 2023/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **04.08.2021 JP 2021128238**

(71) Applicant: **Sony Semiconductor Solutions Corporation**
**Atsugi-shi, Kanagawa 243-0014 (JP)**

(72) Inventor: **YOSHINO, Yoshitaka**
**Atsugi-shi, Kanagawa 243-0014 (JP)**

(74) Representative: **D Young & Co LLP**
**3 Noble Street**
**London EC2V 7BQ (GB)**

(54)    **CHARGING DEVICE**

(57)    A charging apparatus according to an embodiment of the present technology includes an antenna section, a rectifier circuit, a power storage, and a charge controller. The antenna section is a dipole-structure antenna section that includes a first antenna conductor and a second antenna conductor that is a conductor different from the first antenna conductor, the first antenna conductor being electrically coupled to a target including a metallic body or a human body, the second antenna conductor not being connected to the target. The rectifier circuit rectifies output from the antenna section. The power storage generates power on the basis of output from the rectifier circuit and charges a power storing element with the power. The charge controller controls an operation of the power storage according to a voltage level of the power.

FIG.10

EP 4 380 004 A1

**Description**

Technical Field

The present technology relates to a charging apparatus that can be applied to energy harvesting.

Background Art

Patent Literature 1 discloses a power supply circuit in which an energy harvesting device is used as a power generation source. In this power supply circuit, the power generation source is connected to a power storage device through a switching element and a voltage boosting circuit. Further, a charging device is connected between the power generation source and the switching element. When the charging device has been charged, the switching element is turned on, and the power storage device is charged. Furthermore, when the charging device has been discharged, the switching element is turned off, and a charging path used to charge the power storage device is blocked. This makes it possible to store, in the power storage device, very little power generated by the energy harvesting device (for example, paragraphs [0005], [0009], and [0010] of the specification and Figs. 1 and 2 in Patent Literature 1).

Citation List

Patent Literature

Patent Literature 1: Japanese Patent Application Laid-open No. 2013-38941

Disclosure of Invention

Technical Problem

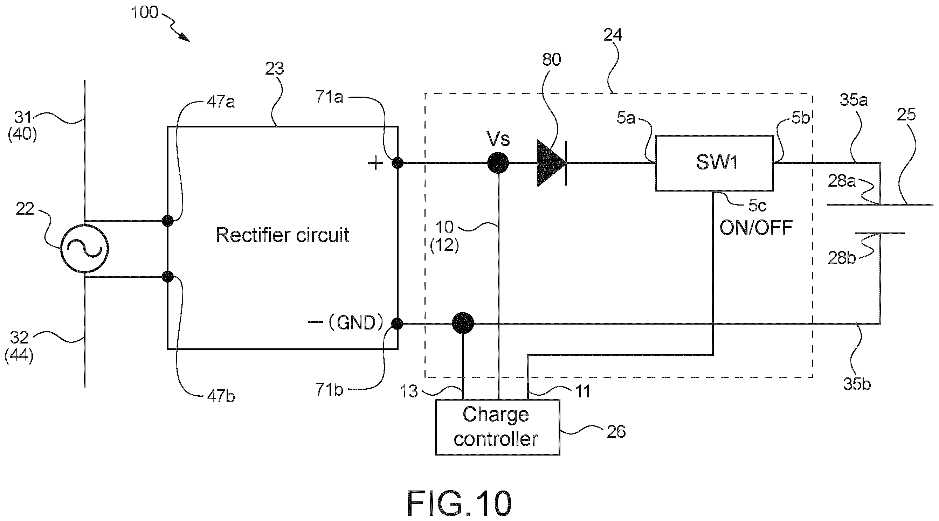

In recent years, energy harvesting using energy of an electric field present in a space has been discussed. Examples of the electric field present in a space include various electric fields such as an electric field such as an electrostatic charge that is distributed near a material, and an electric field such as radio waves that propagate through the air. There is a need for a technology that enables such a wide range of electric field energy to be stored efficiently.
In view of the circumstances described above, it is an object of the present technology to provide a charging apparatus that enables a wide range of electric field energy to be stored efficiently. Solution to Problem
In order to achieve the object described above, a charging apparatus according to an embodiment of the present technology includes an antenna section, a rectifier circuit, a power storage, and a charge controller.
The antenna section is a dipole-structure antenna section that includes a first antenna conductor and a second antenna conductor that is a conductor different from the first antenna conductor, the first antenna conductor being electrically coupled to a target including a metallic body or a human body, the second antenna conductor not being connected to the target. In other words, the antenna section is a dipole-structure antenna that includes the first and second antenna conductors. From between the two antenna conductors, the first antenna conductor is coupled to a metallic body or a human body to form one of antenna elements included in the dipole-structure antenna.
The rectifier circuit rectifies output from the antenna section.
The power storage generates power on the basis of output from the rectifier circuit and charges a power storing element with the power.
The charge controller controls an operation of the power storage according to a voltage level of the power.
The dipole-structure antenna section including the first and second antenna conductors is provided to the charging apparatus. The first antenna conductor is configured to be electrically coupled to a target corresponding to a metallic body or a human body, and the second antenna conductor is configured to not be connected to the target. The use of such an antenna section makes it possible to draw a wide range of electric field energy. Output from the antenna section is rectified by the rectifier circuit. Further, power that is generated from the output from the rectifier circuit is used to charge the power storing element. An operation of the charging is controlled according to a voltage level of the power. This makes it possible to efficiently store a wide range of electric field energy.
The power storage may include a first switching switch that is arranged between the rectifier circuit and the power storing element, the first switching switch switching between an on state and an off state with respect to connection between the rectifier circuit and the power storing element. In the present disclosure, SW1 illustrated in Fig. 10 corresponds to an embodiment of the first switching switch.
The charge controller may detect an output voltage of the rectifier circuit as the voltage level of the charge-use power, and may perform switching to turn on or off the first switching switch according to a result of the detection.

The charge controller may turn off the first switching switch when the output voltage of the rectifier circuit exceeds a threshold voltage for the first switching switch.

The first switching switch may be a MOSFET or a load switch.

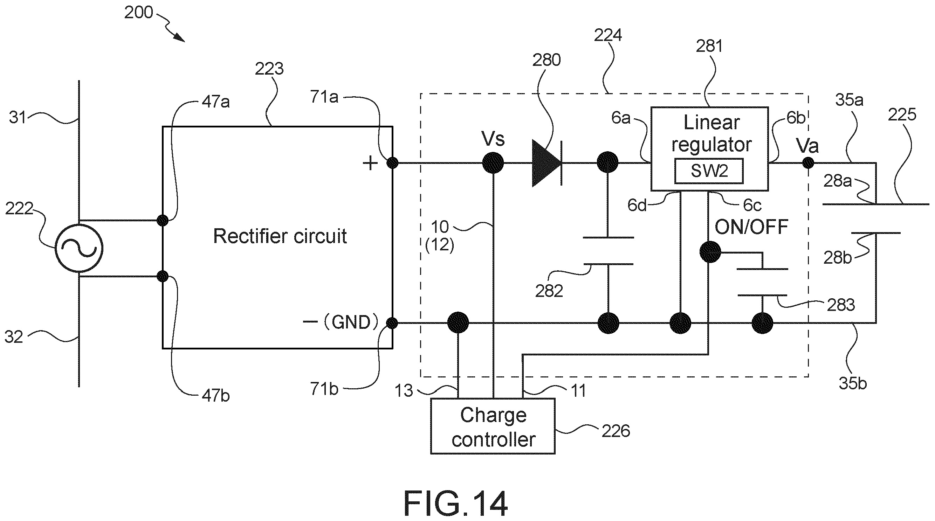

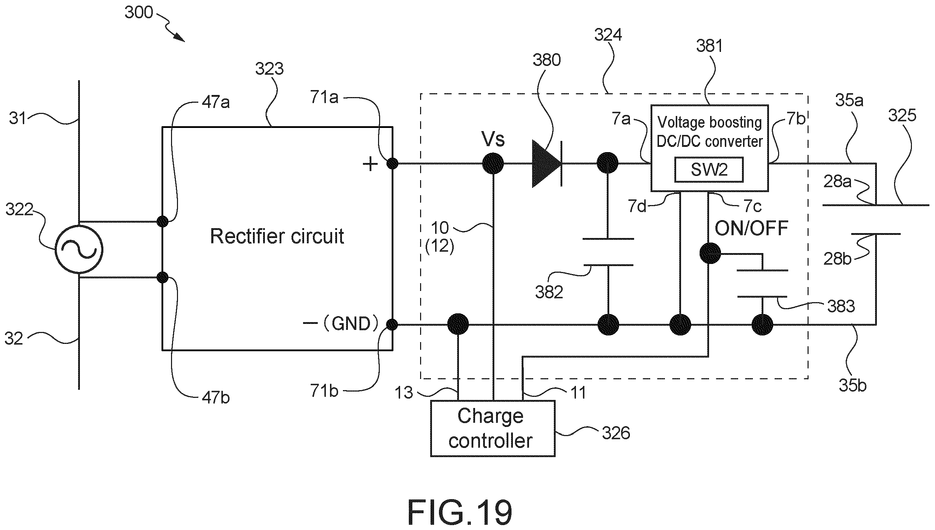

The power storage may include a second switching switch that controls supply of the power to the power storing element. In the present disclosure, SW2 illustrated in Figs. 14 and 19 corresponds to an embodiment of the second switching switch.

The power storage may include a storage capacitor that stores therein the output from the rectifier circuit, the storage capacitor being connected to the second switching switch. In this case, the charge controller may detect a voltage of the storage capacitor as the voltage level of the power, and may perform switching to turn on or off the second switching switch according to a result of the detection.

The charge controller may turn on the second switching switch when the voltage of the storage capacitor exceeds a threshold voltage for the second switching switch.

The charge controller may output a control signal used to turn on the second switching switch, and the power storage may include an adjustment capacitor that is charged by the control signal.

The second switching switch may include a control terminal to which the control signal is input. In this case, capacitance of the adjustment capacitor may be set such that, until a voltage of the storage capacitor decreases up to a specified voltage, a voltage state at the control terminal is equivalent to the voltage state at the control terminal at the time of input of the control signal to the control terminal.

The second switching switch may be a voltage adjustment element that adjusts a voltage of the power.

The voltage adjustment element may be a linear regulator that adjusts a voltage of the storage capacitor to apply the adjusted voltage to the power storing element.

The voltage adjustment element may be a voltage boosting converter that boosts a voltage of the storage capacitor to apply the boosted voltage to the power storing element.

The power storage may include a storage capacitor that stores therein the output from the rectifier circuit, the storage capacitor being connected to the voltage boosting converter. In this case, capacitance of the storage capacitor may be set such that the storage capacitor is capable of storing therein at least three times more power, compared to power consumed by the voltage boosting converter.

At least one of the voltage adjustment element or the charge controller may be driven using the output from the rectifier circuit as a power supply.

The power storage may include a first storage capacitor, a second storage capacitor, a third switching switch, and a fourth switching switch, each of the first and second storage capacitors storing therein the output from the rectifier circuit, the third switching switch performing switching on the first and second storage capacitors to connect one of the first and second storage capacitors to the rectifier circuit, the fourth switching switch performing switching on the first and second storage capacitors to connect one of the first and second storage capacitors to the power storing element. In this case, the charge controller may control the third and fourth switching switches such that the second storage capacitor is charged while the first storage capacitor is supplying power to the power storing element.

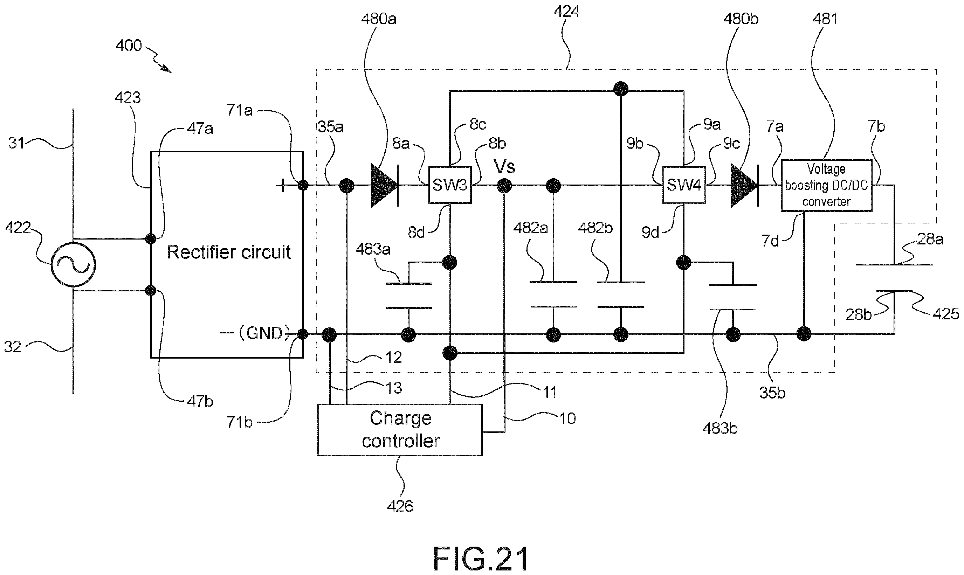

In the present disclosure, SW3 illustrated in Fig. 21 corresponds to an embodiment of the third switching switch, and SW4 illustrated in Fig. 21 corresponds to an embodiment of the fourth switching switch.

The charge controller may control the third and fourth switching switches such that, when a voltage of the first storage capacitor exceeds a threshold voltage, the power storing element and the first storage capacitor are connected to each other and the rectifier circuit and the second storage capacitor are connected to each other. Further, the charge controller may control the third and fourth switching switches such that, when the voltage of the first storage capacitor is less than the threshold voltage, the power storing element and the second storage capacitor are connected to each other and the rectifier circuit and the first storage capacitor are connected to each other.

The charge controller may output a control signal used to control the third and fourth switching switches. In this case, the power storage may include a first adjustment capacitor and a second adjustment capacitor, the first adjustment capacitor being charged by the control signal input to the third switching switch, the second adjustment capacitor being charged by the control signal input to the fourth switching switch.

Capacitance of the first adjustment capacitor and capacitance of the second adjustment capacitor may be set such that the third switching switch performs switching earlier than the fourth switching switch.

The power storage may include a backflow prevention diode that is provided between the rectifier circuit and the power storing element, the backflow prevention diode preventing backflow of current coming from the power storing element.

The charge controller may exhibit an internal resistance greater than or equal to 2 M$\Omega$.

Brief Description of Drawings

[Fig. 1] Fig. 1 is a block diagram illustrating an example of a functional configuration of a charging apparatus according to a first embodiment of the present technology.

[Fig. 2] Fig. 2 is a schematic diagram used to describe reception of power that is performed by a power receiver through a target.

[Fig. 3] Fig. 3 schematically illustrates an example of a planar configuration of and examples of cross-sectional configurations of the charging apparatus.

[Fig. 4] Fig. 4 schematically illustrates an example of a configuration of a circuit board.

[Fig. 5] Fig. 5 schematically illustrates another example of the configuration of the circuit board.

[Fig. 6] Fig. 6 is a circuit diagram illustrating an example of a rectifier circuit included in the charging apparatus.

[Fig. 7] Fig. 7 is a schematic diagram used to describe an operation of an antenna section.

[Fig. 8] Fig. 8 is a schematic diagram used to describe an example of using the charging apparatus.

[Fig. 9] Fig. 9 is a block diagram illustrating an example of a configuration of the charging apparatus according to the first embodiment.

[Fig. 10] Fig. 10 is a circuit diagram illustrating an example of the configuration of the charging apparatus according to the first embodiment.

[Fig. 11] Fig. 11 is a circuit diagram illustrating an example of a configuration of a charge controller.

[Fig. 12] Fig. 12 is a circuit diagram illustrating another example of the configuration of the charging apparatus.

[Fig. 13] Fig. 13 is a block diagram illustrating an example of a configuration of a charging apparatus according to a second embodiment.

[Fig. 14] Fig. 14 is a circuit diagram illustrating an example of the configuration of the energy-harvesting charging apparatus according to the second embodiment.

[Fig. 15] Fig. 15 is a schematic graph on which temporal changes in a charge voltage and a charge current in performing charging by a CV approach are given.

[Fig. 16] Fig. 16 is a graph on which a relationship between a charge voltage and a charge rate in performing charging by the CV approach is given.

[Fig. 17] Fig. 17 is a graph on which charging characteristics of the charging apparatus upon performing actual charging are given.

[Fig. 18] Fig. 18 is a block diagram illustrating an example of a configuration of a charging apparatus according to a third embodiment.

[Fig. 19] Fig. 19 is a circuit diagram illustrating an example of the configuration of the charging apparatus according to the third embodiment.

[Fig. 20] Fig. 20 is a block diagram illustrating an example of a configuration of a charging apparatus according to a fourth embodiment.

[Fig. 21] Fig. 21 is a circuit diagram illustrating an example of the configuration of the charging apparatus according to the fourth embodiment.

[Fig. 22] Fig. 22 schematically illustrates an example of connection of a harvester apparatus according to a fifth embodiment.

[Fig. 23] Fig. 23 is a circuit diagram illustrating an example of a configuration of a harvester apparatus that adopts measures against short circuit.

[Fig. 24] Fig. 24 schematically illustrates a measurement circuit used to measure a relationship between output from a harvester apparatus and grounding resistance.

[Fig. 25] Fig. 25 is a table in which an example of the measurement of the relationship between the output from the harvester apparatus and the grounding resistance is given.

[Fig. 26] Fig. 26 is a circuit diagram illustrating another example of the configuration of the harvester apparatus adopting measures against short circuit.

[Fig. 27] Fig. 27 schematically illustrates an example of a configuration of a harvester apparatus according to a sixth embodiment.

[Fig. 28] Fig. 28 schematically illustrates an example of a configuration of an apparatus that includes a harvester apparatus according to a seventh embodiment.

[Fig. 29] Fig. 29 is a block diagram illustrating an example of a functional configuration of the apparatus including the harvester apparatus illustrated in Fig. 28.

Mode(s) for Carrying Out the Invention

Embodiments according to the present technology will now be described below with reference to the drawings.

<First Embodiment>

[Overview of Charging Apparatus]

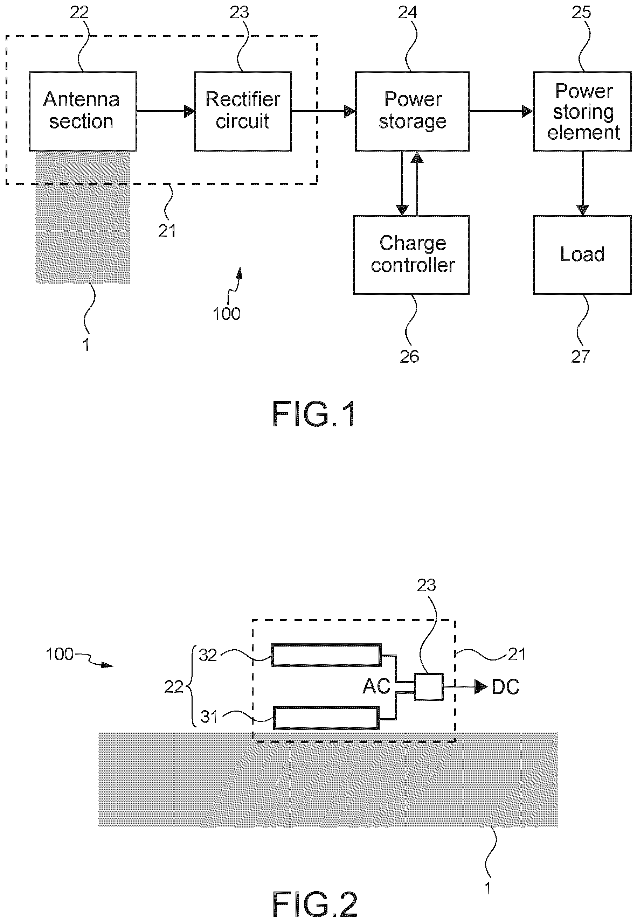

Fig. 1 is a block diagram illustrating an example of a functional configuration of a charging apparatus according to a first embodiment of the present technology. A charging apparatus 100 is an apparatus that draws energy of an electric field present in a space from, for example, a metallic body or a human body, and charges the energy as power. A metallic body or human body from which the electric field energy is to be drawn by the charging apparatus 100 is hereinafter referred to as a target 1.

As illustrated in Fig. 1, the charging apparatus 100 includes an antenna section 22, a rectifier circuit 23, a power storage 24, a power storing element 25, a charge controller 26, and a load 27.

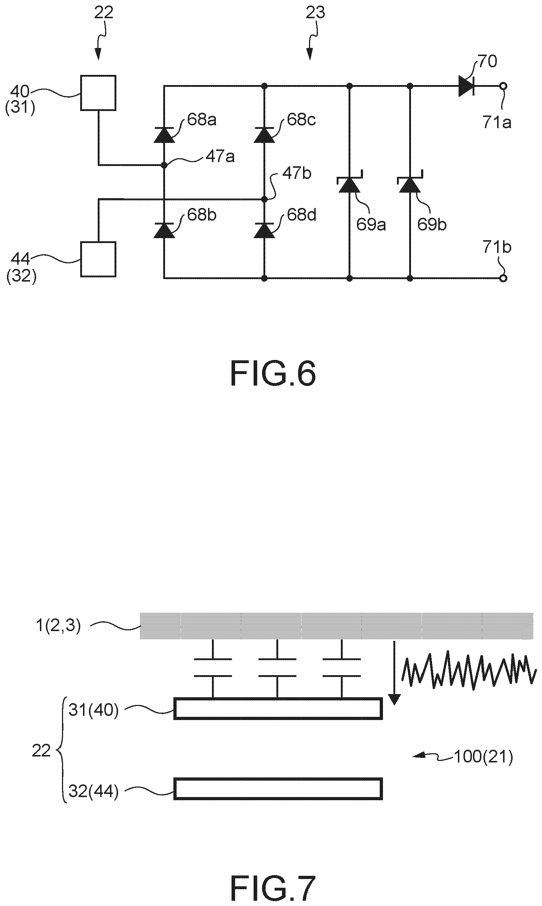

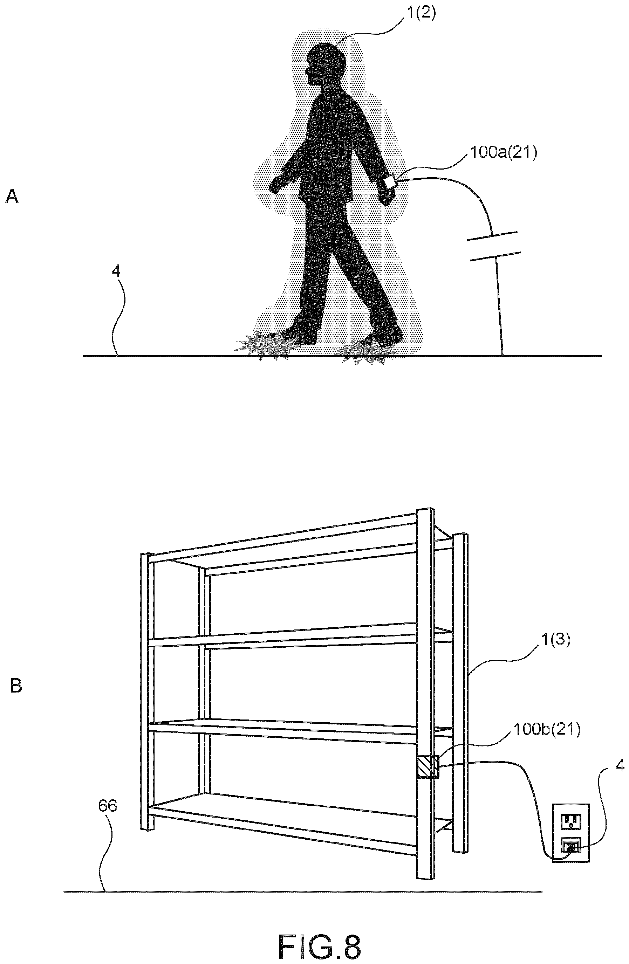

The antenna section 22 serves as a reception antenna used to receive power through the target 1 including a metallic body or a human body. For example, the antenna section 22 receives, as power, energy of an electric field, such as radio waves and a quasi-electrostatic field, that is present in a surrounding space that surrounds the target 1. This will be described in detail later with reference to, for example, Figs. 7 and 8.

The rectifier circuit 23 is connected to the antenna section 22 and rectifies received alternating-current power. In other words, the rectifier circuit 23 rectifies output from the antenna section 22.

In the present embodiment, a power receiver 21 is implemented by the antenna section 22 and the rectifier circuit 23. The power receiver 21 can draw, as power, energy of an electric field present around the target 1. In other words, the power receiver 21 can perform energy harvesting for harvesting power from a surrounding environment.

Note that it is favorable that the antenna section 22 and the rectifier circuit 23 be connected in series when the target 1 is a human body. This makes it possible to efficiently collect relatively low electric field energy that is received through the human body.

The power storage 24 is a circuit that charges the power storing element 25. The power storage 24 generates power on the basis of output from the rectifier circuit 23, and charges the power storing element 25 with the generated power. For example, the power generated by the power storage 24 may correspond to output from the rectifier circuit 23 itself, or may correspond to, for example, power stored in, for example, a capacitor. The power storing element 25 is charged with such power. The power generated by the power storage 24 and used to charge the power storing element 25 may be hereinafter referred to as charge-use power.

The power storing element 25 is an element that stores therein power (power received by the antenna section 22) rectified by the rectifier circuit, and supplies power to the load 27 as necessary.

The charge controller 26 detects a voltage level of the charge-use power generated by the power storage 24, and operates the power storage 24 according to a result of the detection. In other words, the charge controller 26 controls an operation of the power storage 24 according to the voltage level of the charge-use power.

The load 27 is a circuit or element that is driven by power supplied by the power storing element 25. For example, a control unit such as a microcomputer, a communication unit, or any sensor is used as the load 27.

Fig. 2 is a schematic diagram used to describe reception of power that is performed by the power receiver 21 through the target 1.

The antenna section 22 of the power receiver 21 includes a first antenna conductor 31 and a second antenna conductor 32. The first antenna conductor 31 is a conductor that is electrically coupled to the target 1 including a metallic body or a human body. The second antenna conductor 32 is a conductor that is different from the first antenna conductor 31 and is not connected to the target 1.

Fig. 2 schematically illustrates the antenna section 22 (the power receiver 21) being provided such that the first antenna conductor 31 is in contact with a surface of the target 1.

The antenna section 22 is a dipole-structure antenna that includes the first antenna conductor 31 and the second antenna conductor 32.

In the present disclosure, the dipole-structure antenna is an antenna having a structure in which an electric field is transmitted and received using two antenna elements.

The electric field corresponds to alternating-current waves. Thus, at any frequency, a conductor on which an electric field acts is sure to have a portion in which a voltage is high and a portion in which the voltage is low.

In general, a length of a conductor serving as an antenna element is set to be a length depending on a wavelength of a frequency to be received. Typically, a length of each antenna element included in a dipole-structure antenna is adjusted to be one-quarter wavelength of a frequency to be received. In this case, a portion in which a voltage induced at a frequency to be received is high and a portion in which the voltage is low coincide. Thus, obtained power becomes maximum. In this structure, the sum of the lengths of the respective antenna elements corresponds to half the wavelength. This is a so-called half-wave dipole antenna.

The antenna section 22 has a structure that uses the antenna structure described above. Specifically, the antenna section 22 includes two antenna elements that are the first antenna conductor 31 electrically coupled to the target 1, and the second antenna conductor 32 not being connected to the target 1, the second antenna conductor 32 being a conductor that is different from the first antenna conductor 31.

The target 1 to which the first antenna conductor 31 from between the two antenna elements is coupled is a metallic body or human body that is insulated from the earth (GND) (that is above the earth). Thus, the target 1 serves as one of the antenna elements through the first antenna conductor 31.

As described above, regardless of the frequency of an electric field, a conductor on which the electric field acts is sure to have a portion in which a voltage is high and a portion in which the voltage is low. Thus, when an electric field acts on two antenna elements (the first antenna conductor 31 and the second antenna conductor 32), current is sure to flow through the two antenna elements. Current that flows through each antenna element is not necessarily a largest current that can be drawn from an electric field. At any rate, current (energy of an electric field) can be drawn from each antenna element.

The antenna section 22 receives energy of an electric field using these effects.

Note that examples of the configuration of the charging apparatus 100 according to the present disclosure also include a configuration in which the second antenna conductor 32 is connected to the earth (GND) using a cable, which will be described with reference to B of Fig. 8. In general, such a configuration may be referred to as a monopole antenna.

On the other hand, in this configuration, the antenna section 22 is connected to the earth (GND) via the second antenna conductor 32. Thus, this configuration is also the configuration in which an electric field is received using two antenna elements that are the first antenna conductor 31 and the second antenna conductor 32. In this sense, the above-described configuration in which the second antenna conductor 32 is connected to the earth (GND) can also be the dipole structure according to the present disclosure.

In the power receiver 21, alternating-current (AC) power (power of electric field energy) that is received by the antenna section 22 (the first antenna conductor 31 and the second antenna conductor 32) is input to the rectifier circuit 23. Then, power for which the AC has been rectified to be converted into a direct current (DC) is output by the rectifier circuit 23. As described above, the power receiver 21 receives, through the target 1, power depending on electric field energy.

For example, it is sufficient if the target 1 is a dielectric object on which electric charges are induced due to electric field energy. As described above, the target 1 includes a metallic body or a human body. Examples of the metallic body include industrial products familiar with the public (such as vehicle, vending machine, refrigerator, microwave, metal rack, guard rail, mailbox, and traffic light) and metallic objects. The metallic body is above the earth (GND) in order to draw power. The metallic body may be made of any metal such as iron, aluminum, copper, or a metallic alloy, and the type of material is not limited if the material is metal.

[Configuration of Charging Apparatus 100]

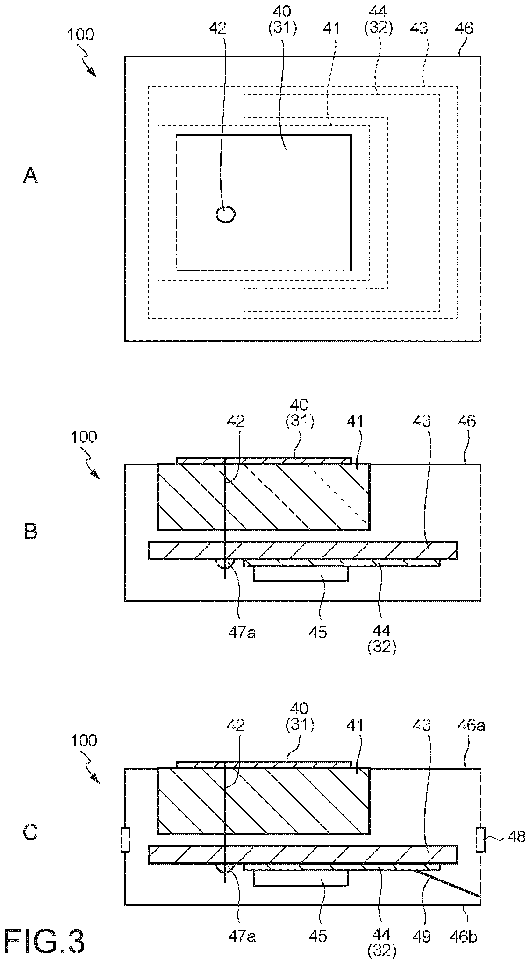

Fig. 3 schematically illustrates an example of a planar configuration of and examples of cross-sectional configurations of the charging apparatus 100. A and B of Fig. 3 are a schematic plan view and a schematic cross-sectional view of the charging apparatus 100. Further, C of Fig. 3 is a schematic cross-sectional view illustrating another example of the configuration of the charging apparatus 100.

As illustrated in A and B of Fig. 3, the charging apparatus 100 includes a conductor electrode 40, a dielectric section 41, a conductive pin 42, a circuit board 43, a substrate ground 44, a circuit section 45, and a case 46. The conductor electrode 40, the dielectric section 41, and the circuit board 43 are arranged in a layered formation to be provided to the charging apparatus 100 in this order.

The conductor electrode 40 is a conductor that is used by being electrically coupled to the target 1, and is arranged at a position, in the charging apparatus 100, at which the conductor electrode 40 can be brought into contact with the target 1. Here, the conductor electrode 40 is arranged to be exposed from a surface of the case 46. The conductor electrode 40 serves as the first antenna conductor 31 described with reference to Fig. 2.

An electrode using, for example, metal is used as the conductor electrode 40. Examples of the metal used for the conductor electrode 40 include gold, silver, aluminum, copper, iron, nickel, and alloys. For example, the use of gold or silver makes it possible to form a low-resistance electrode. Further, the use of, for example, aluminum, copper, iron or nickel makes it possible to reduce costs for the conductor electrode 40. Further, the use of an alloy of these kinds of metal or an alloy of one of these kinds of metal and another kind of metal makes it possible to form, for example, an electrode light in weight or a highly durable electrode as appropriate.

Further, a conductive resin or rubber containing, for example, carbon or metal may be used as the conductor electrode 40. The use of a conductive resin makes it possible to easily form, for example, electrodes of various shapes. Further, the use of a conductive rubber makes it possible to form, for example, an elastically deformable electrode or an electrode with a high degree of adhesiveness.

Moreover, a material of the conductor electrode 40 is not limited. One of the materials described above may be used alone or the materials may be used in combination to form an electrode.

In the present embodiment, the conductor electrode 40 in the form of a thin plate (a patchy conductor electrode 40) is used. In other words, the conductor electrode 40 is a flat electrode. In this case, the conductor electrode 40 serves as an antenna that is brought into contact with the target 1. This makes it possible to sufficiently broaden the area of contact with or capacitive coupling to the target 1 (refer to, for example, Fig. 8).

Note that a shape of the conductor electrode 40 is not limited, and, for example, a shape suitable for, for example, a shape of the charging apparatus 100 or a portion, of the target 1, to which the conductor electrode 40 is attached. For example, in addition to the flat electrode, an electrode or the like having a pin shape, a hemispheric shape, or a concave-convex shape may be used as the conductor electrode 40.

Further, the conductor electrode 40 may be configured such that the conductor included in the electrode is brought into contact with the target 1, or a surface of the conductor electrode 40 that is brought into contact with the target 1 may be coated with resin. For example, resin resistant to water such as waterproof or drip-proof, or resin resistant to weather such as resistant to, for example, ultraviolet is used to coat the conductor electrode 40. This prevents the conductor electrode 40 from corroding when, for example, the charging apparatus 100 is used outdoors or in a pool.

The dielectric section 41 is a plate-shaped dielectric that is provided between the conductor electrode 40 and the circuit board 43. For example, the dielectric section 41 is arranged to be in contact with a surface of the conductor electrode 40 that is situated opposite to the surface being included in the conductor electrode 40 and with which the target 1 is brought into contact. For example, the provision of the dielectric section 41 makes it possible to improve the efficiency in transferring power from the conductor electrode 40 to the target 1 and to decrease spacing between antennas.

Note that a certain space may be formed between the conductor electrode 40 and the circuit board 43 without providing the dielectric section 41.

The conductive pin 42 is pin-shaped wiring that passes through the dielectric section 41 to connect the conductor electrode 40 and the circuit board 43. One of two ends of the conductive pin 42 is connected to the conductor electrode 40, and another of the two ends is connected to an electrode (a connection point 47a) of the circuit board 43.

The circuit board 43 is a board on which the substrate ground 44 and the circuit section 45 are provided. In the example illustrated in B of Fig. 3, the substrate ground 44, the circuit section 45, and the connection point 47a are formed on a surface of the circuit board 43 that is situated opposite to the dielectric section 41. The connection point 47a is an electrode that connects the circuit section 45 and the conductor electrode 40. The conductive pin 42 passes through the circuit board 43 to be soldered to the connection point 47a. Moreover, the substrate ground 44, the circuit section 45, and the like may be formed on a surface of the circuit board 43 that faces the dielectric section 41. Further, the substrate ground 44, the circuit section 45, and the like may be formed on the two surfaces of the circuit board 43.

The substrate ground 44 is a conductor pattern (a ground pattern) that is a ground for the circuit board 43. Typically, a ground pattern of copper foil is used as the substrate ground 44.

In the example illustrated in B of Fig. 3, the substrate ground 44 serves as the second antenna conductor 32. In other words, the second antenna conductor 32 is formed of the ground pattern being provided on the circuit board 43 of the charging apparatus 100.

Further, the antenna section 22 of the charging apparatus 100 is formed of the conductor electrode 40 (the first antenna conductor 31) and substrate ground 44 (the second antenna conductor 32) described above.

The substrate ground 44 serving as the second antenna conductor 32 is configured to not be brought into contact with the target 1 and to be capacitively coupled to an earth ground. Alternatively, the substrate ground 44 may be connected to the earth ground. In other words, it is sufficient if the substrate ground 44 is configured to be electrically coupled to the earth ground.

For example, when the target 1 is a human body, the substrate ground 44 is configured to be capacitively coupled to the earth ground such that a user can freely move in a state of wearing the charging apparatus 100. On the other hand, when, for example, a stationary metallic body is the target 1, the substrate ground 44 may be connected to the earth ground with the understanding that the charging apparatus 100 is not moved.

The same applies to another element that serves as the second antenna conductor 32.

In the following description, an element that serves as the second antenna conductor 32 is primarily assumed to be capacitively coupled to the earth ground.

The circuit section 45 is a unit that includes various circuits and is provided so as to not overlap the substrate ground 44. In the present embodiment, the rectifier circuit 23 is formed in the circuit section 45. Moreover, the circuit section 45 may be provided with, for example, the power storage 24, the power storing element 25, the charge controller 26, and the load 27 that are illustrated in Fig. 1. Further, the power storage 24 and the like may be provided separately from the circuit section 45.

The case 46 is a housing of the charging apparatus 100. The case 46 accommodates therein, for example, the power receiver 21 including the antenna section 22 and the rectifier circuit 23, other substrates, and other circuits.

Further, a portion of the case 46 that is part of a portion brought into contact with the target 1 and is other than the conductor electrode 40, is made of an insulating member. Thus, a body of the case 46 that is other than a portion (the conductor electrode 40) provided to be brought into contact with the target 1, will not bring the target 1 into conduction even if the body of the case 46 is brought into contact with the target 1. A material such as insulating resin or rubber is used as the insulating member.

In the example illustrated in B of Fig. 3, in addition to a surface of the case 46 that is brought into contact with the target 1, side surfaces and the opposite surface of the case 46 are also made using an insulating member. This prevents the substrate ground 44 (the second antenna conductor 32) from being shielded. This enables the substrate ground 44 to be capacitively coupled to the earth ground excellently.

The charging apparatus 100 illustrated in C of Fig. 3 is different from the charging apparatus 100 illustrated in B of Fig. 3 in including the case 46 having a different configuration. Here, a case 46a and a case 46b are used as the case 46. The case 46a is a housing that covers a side on which the conductor electrode 40 is provided, and is made using an insulating member. The case 46b is a housing that covers a side situated opposite to the side on which the conductor electrode 40 is provided, and is made using a conductive member such as metal.

Further, the case 46a and the case 46b are connected to each other through a connection portion 48 using a screw or fitting.

In C of Fig. 3, a portion of the case 46 that is not brought into contact with the target 1 is formed using the conductive case 46b, as described above. In this case, the case 46b can be used as the second antenna conductor 32.

For example, the substrate ground 44 provided on the circuit board 43 and the conductive case 46b are electrically connected to each other using, for example, a metal wire 49. In other words, the second antenna conductor 32 is formed of a conductive member (the case 46b) that is provided to a portion of a housing of the charging apparatus 100 that is not brought into contact with the target 1. This makes it possible to obtain the second antenna conductor 32 fully capacitively coupled to the earth ground.

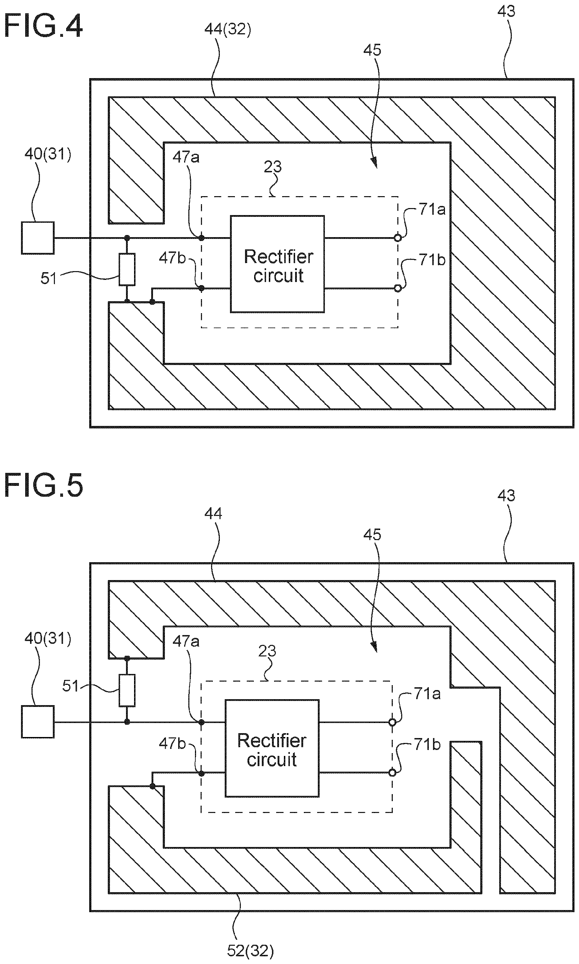

Further, in a configuration in which the substrate ground 44 is used as the second antenna conductor 32 (Refer to Fig. 4), the substrate ground 44 and the case 46b are connected to each other through the metal wire 49 when the conductive case 46b is used as a portion of the case 46 that is not brought into contact with the target 1. In this case, both the substrate ground 44 and the case 46b serve as the second antenna conductor 32. Further, the area or the like of the substrate ground 44 may be reduced when the case 46b is used as a ground.

Further, in a configuration in which a conductor pattern 52 described later is used as the second antenna conductor 32 (refer to Fig. 5), the case 46b and the conductor pattern 52 are connected to each other through the metal wire 49 when the conductive case 46b is used as a portion of the case 46 that is not brought into contact with the target 1. In this case, both the conductor pattern 52 and the case 46b serve as the second antenna conductor 32. Further, when the conductor pattern 52 is connected to the case 46b, the area of the substrate ground 44 can be increased by reducing the area or the like of the conductor pattern 52.

Fig. 4 schematically illustrates an example of a configuration of the circuit board 43. Fig. 4 schematically illustrates an example of a planar configuration of the circuit board 43 described with reference to Fig. 3.

A hatched region in the figure corresponds to the substrate ground 44 (the second antenna conductor 32). The substrate ground 44 is configured to not overlap the circuit section 45 to which, for example, the rectifier circuit 23 is provided. A shape and arrangement of the substrate ground 44 are not limited, and may be set as appropriate according to, for example, a configuration of the circuit section 45. Further, wiring used to connect the conductor electrode 40 (the first antenna conductor 31) and the circuit section 45 is configured to not overlap the substrate ground 44.

As illustrated in Fig. 4, the conductor electrode 40 (the first antenna conductor 31) and substrate ground 44 (the second antenna conductor 32) being included in the antenna section 22 are respectively connected to the rectifier circuit 23 through two connection points that are the connection point 47a and a connection point 47b. Further, the rectifier circuit 23 includes two output terminals 71a and 71b that output rectified power.

An electrostatic protection component 51 used to take measures against static electricity is provided between the conductor electrode 40 and the substrate ground 44. A varistor or the like is used as the electrostatic protection component 51. This makes it possible to protect an element situated on a side of the circuit section 45 when, for example, a high voltage is applied between the conductor electrode 40 and the substrate ground 44.

Fig. 5 schematically illustrates another example of the configuration of the circuit board 43. In the example illustrated in Fig. 5, the second antenna conductor 32 is another conductor pattern 52 that is provided to the circuit board 43 separately from the substrate ground 44.

Here, the substrate ground 44 and the conductor pattern 52 electrically isolated from the substrate ground 44 are formed so as to not overlap the circuit section 45 (such as the rectifier circuit 23).

The conductor pattern 52 is configured to not be brought into contact with the target 1, and to be capacitively coupled to the earth ground.

In the circuit board 43 illustrated in Fig. 5, the conductor electrode 40 (the first antenna conductor 31) and conductor pattern 52 (the second antenna conductor 32) being included in the antenna section 22 are respectively connected to the rectifier circuit 23 through the two connection points 47a and 47b.

Further, the electrostatic protection component 51 such as a varistor being used to take measures against static electricity is provided between the conductor electrode 40 and the substrate ground 44, as in the case of Fig. 4.

Fig. 6 is a circuit diagram illustrating an example of the rectifier circuit 23 included in the charging apparatus 100.

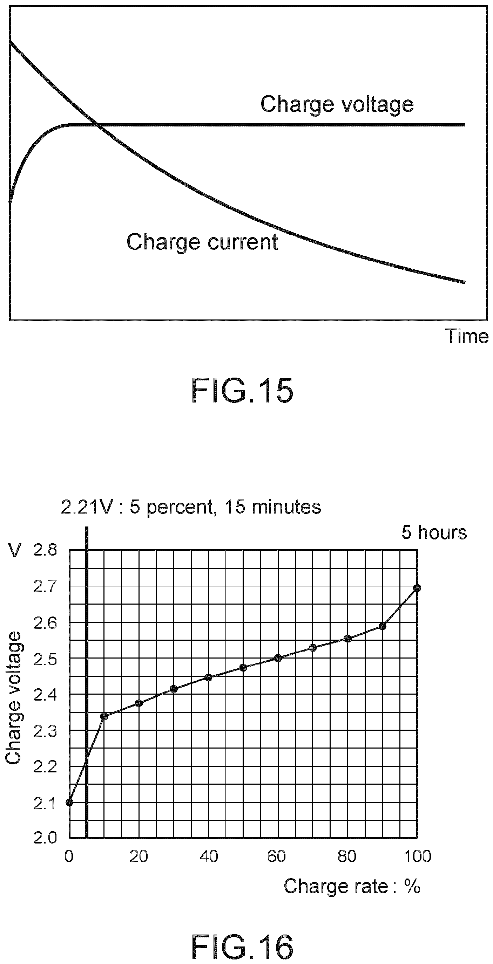

For example, it is conceivable that, in the charging apparatus 100, a voltage of several volts could be caused between the conductor electrode 40 and the substrate ground 44 but current that can be drawn could be relatively small (refer to, for example, Figs. 15 and 16). When such a signal is rectified, it is important that, for example, leakage current be sufficiently suppressed.

As illustrated in Fig. 6, the rectifier circuit 23 is a full-wave rectifier circuit.

The rectifier circuit 23 includes four diodes 68a to 68d, two Zener diodes 69a and 69b, a backflow prevention diode 70, and output terminals 71a and 71b.

The diodes 68a and 68b are connected in series, with the diode 68a being situated at the beginning in a forward direction. Further, the connection point 47a is provided between the diodes 68a and 68b. The diodes 68c and 68d are connected in series, with the diode 68c being situated at the beginning in the forward direction.

Respective cathodes of the diode 68a, the diode 68c, the Zener diode 69a, and the Zener diode 69b are connected to an anode of the backflow prevention diode 70. Further, a cathode of the backflow prevention diode 70 is connected to the output terminal 71a.

Respective anodes of the diode 68b, the diode 68d, the Zener diode 69a, and the Zener diode 69b are connected to the output terminal 71b.

The conductor electrode 40 is connected to the connection point 47a being situated between the diodes 68a and 68b. Further, the substrate ground 44 is connected to the connection point 47b of the diodes 68c and 68d.

For example, alternating-current power that is received by the antenna section 22 (the conductor electrode 40 and the substrate ground 44) is full-wave rectified by the four diodes 68a to 68d to be output as direct-current power through the output terminals 71a and 71b. As described above, the rectifier circuit 23 illustrated in Fig. 6 is formed using the smallest diodes 68a to 68d necessary for full-wave rectification. This makes it possible to suppress unnecessary leakage current, and thus to sufficiently improve the efficiency in receiving power.

The Zener diode 69a is an element used to cause, for example, static electricity caused between the conductor electrode 40 and the substrate ground 44 to escape. When a high voltage such as static electricity is caused, the Zener diode 69a serves as an electrostatic protection component used to cause static electricity to escape.

Further, the Zener diode 69b is an element used to protect, for example, an IC circuit (such as the power storage 24) that is situated on an output side of the rectifier circuit 23 and connected to the output terminals 71a and 71b. When, for example, voltage caused between the conductor electrode 40 and the substrate ground 44 is greater than or equal to 6.5 V, the Zener diode 69b serves as a low-resistance conductor. This makes it possible to prevent a circuit situated on the output side from getting broken.

Further, the backflow prevention diode 70 is a diode that prevents current backflow. The provision of the backflow prevention diode 70 makes it possible to prevent backflow upon voltage reduction in the antenna section, and thus to operate a circuit situated on the output side stably.

Note that the configuration of the rectifier circuit 23 is not limited. For example, a voltage doubler rectifier circuit or voltage quadrupling rectifier circuit that multiplies voltage using a capacitor, or a rectifier circuit into which a Cockcroft-Walton circuit is incorporated, may be used. Further, for example, a half-wave rectifier circuit may be used. Moreover, the rectifier circuit 23 may be formed as appropriate according to, for example, characteristics of power reception performed by the antenna section 22 or characteristics of an element or circuit that is used as the load 27.

[Operation of Antenna Section]

Fig. 7 is a schematic diagram used to describe an operation of the antenna section 22. Fig. 8 is a schematic diagram used to describe an example of using the charging apparatus 100.

Fig. 7 schematically illustrates a model of the antenna section 22 of the charging apparatus 100 used by being coupled to the target 1. Further, A and B of Fig. 8 respectively schematically illustrate a charging apparatus 100a that is worn on a human body 2, and a charging apparatus 100b that is used by being fixed to a steel rack that is a metallic body 3.

Here, the operation of the antenna section 22 is described with reference to Figs. 7 and 8.

In general, there are various kinds of electric field energy in an environment in which people are active. These kinds of electric field energy can be classified into low-frequency components and high-frequency components.

For example, leakage electric field (50 Hz / 60 Hz) leaked from a household alternating-current power supply, noise present near a personal computer, and voltage caused when a person is walking (refer to A of Fig. 8) each correspond to electric field energy of a low-frequency component, and are referred to as quasi-electrostatic fields (near fields). On the other hand, for example, radio broadcasting (AM / FM), television broadcasting, and communication radio waves of, for example, cellular phones each correspond to electric field energy of a high-frequency component, and are referred to as radio waves (far fields).

In the example illustrated in A of Fig. 8, the charging apparatus 100 is worn on an arm of the human body 2. Further, it is assumed that the human body 2 is wearing, for example, shoes and is above the earth ground 4. In this case, various kinds of electric field energy, such as radio waves propagating through a region situated around the human body 2 and a quasi-electrostatic field generated due to walking, act on the human body 2 to induce power.

In the example illustrated in B of Fig. 8, the charging apparatus 100 is attached to a leg of the steel rack corresponding to the metallic body 3. The steel rack is arranged on a carpet 66, and is above the earth ground 4. In this case, power is induced in the metallic body 3 due to various kinds of electric field energy such as radio waves and power supply noise. Note that, here, the substrate ground 44 serving as the second antenna conductor 32 situated on a side of the charging apparatus 100 that is not brought into contact with the metallic body 3 is connected to a ground wire (the earth ground 4) of an indoor power supply using, for example, a cable with coating, in order to receive more power.

Fig. 7 schematically illustrates a state of the antenna section 22 of the charging apparatus 100 in scenes illustrated in A and B of Fig. 8. As illustrated in Fig. 7, the first antenna conductor 31 (the conductor electrode 40) of the antenna section 22 and the target 1 are, for example, electrically capacitively coupled to each other, and the target 1 is a non-grounded antenna element for the charging apparatus 100.

Further, in the example illustrated in A of Fig. 8, the second antenna conductor 32 (the substrate ground 44) is capacitively coupled to the earth ground 4 to form a pseudo ground. Further, in the example illustrated in B of Fig. 8, the second antenna conductor 32 (the substrate ground 44) has the same potential as the ground wire corresponding to the earth ground 4.

Consequently, the second antenna conductor 32 serves as the ground for the target 1, such as the human body 2 or the metallic body 3, that serves as an antenna element.

Such a configuration enables the antenna section 22 to capture two kinds of electric field energy that are a quasi-electrostatic field such as noise corresponding to leakage current, and radio waves such as airwaves, using the human body 2 or the metallic body 3 as an antenna element.

Further, the antenna section 22 receives power obtained by combining energy of a quasi-electrostatic field and energy of radio waves. Fig. 7 schematically illustrates a waveform of power received through the target 1 (the human body 2 or the metallic body 3). The waveform of power is a waveform including a wide range of frequency components.

The antenna section 22 having the configuration described above makes it possible to receive, for example, energy of a quasi-electrostatic field of a low frequency such as 50 Hz. The following are reasons that the antenna section 22 resonates with the target 1 at a low frequency. For example, it is considered that iron contained in blood in the human body 2 serves as an antenna when the target 1 is the human body 2. Further, it is considered that a frame or the like included in a structure of the metallic body 3 serves as an antenna when the target 1 is the metallic body 3. Such effects enable the antenna section 22 to capture a very wide range of electric field energy.

Further, when only energy of radio waves of a high frequency is captured, the second antenna conductor 32 does not necessarily have to be capacitively coupled to the earth.

[Configuration of Charging Apparatus 100]

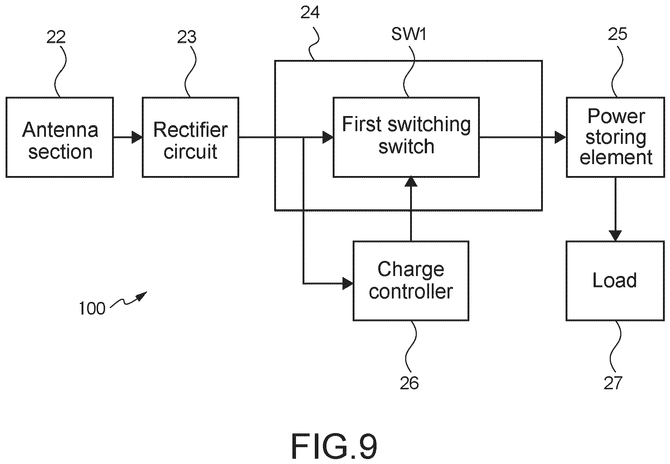

Fig. 9 is a block diagram illustrating an example of the configuration of the charging apparatus 100 according to the first embodiment. As described above, the charging apparatus 100 includes the antenna section 22, the rectifier circuit 23, the power storage 24, the power storing element 25, the charge controller 26, and the load 27.

The antenna section 22 receives power through the target 1 including a metallic body or a human body.

The rectifier circuit 23 is connected to the antenna section 22 and rectifies the received alternating-current power.

A first switching switch SW1 is provided to the power storage 24. The first switching switch SW1 switches between an on state and an off state with respect to connection between the rectifier circuit 23 and the power storing element 25.

The power storing element 25 is charged with power that is supplied through the first switching switch SW1. Further, power is supplied to the power storing element 25, and is supplied to the load 27 as necessary.

The charge controller 26 operates the first switching switch SW1 according to a voltage level of output (charge-use power) from the rectifier circuit 23.

Fig. 10 is a circuit diagram illustrating an example of the configuration of the charging apparatus 100 according to the first embodiment. Fig. 10 illustrates a specific circuit configuration of the power storage 24 that is included in the configuration of the charging apparatus 100. Note that an illustration of the load 27 is omitted in Fig. 10.

The antenna section 22 in Fig. 10 is illustrated as an alternating-current signal source that includes the first antenna conductor 31 and the second antenna conductor 32. As described above, the first antenna conductor 31 is the conductor electrode 40 electrically coupled to the target 1. Further, the second antenna conductor 32 is the substrate ground 44 not being connected to the target 1.

The rectifier circuit 23 is connected to the first antenna conductor 31 (the conductor electrode 40) and to the second antenna conductor 32 (the substrate ground 44), and rectifies alternating-current power output by the antenna section 22 to output the rectified power as direct-current power through the output terminals 71a and 71b. Here, the output terminal 71a and the output terminal 71b respectively serve as a positive electrode and a negative electrode (a GND electrode) of the rectifier circuit 23 (refer to Fig. 6).

The power storage 24 is an element that charges the power storing element 25.

In the present embodiment, output from the rectifier circuit 23 is input to the power storing element 25 in order to charge the power storing element 25. In other words, power output by the rectifier circuit 23 is used with no change as charge-use power used to charge the power storing element 25.

The power storage 24 includes a backflow prevention diode 80 and the first switching switch SW1. Further, the first switching switch SW1 includes an input terminal 5a, an output terminal 5b, and a control terminal 5c. In Fig. 10, the first switching switch SW1 is represented by SW1.

As illustrated in Fig. 10, an anode of the backflow prevention diode 80 is connected to the output terminal 71a of the rectifier circuit 23, and a cathode of the backflow prevention diode 80 is connected to the input terminal 5a of the first switching switch SW1. The output terminal 5b of the first switching switch SW1 is connected to a positive electrode 28a of the power storing element 25. Further, a negative electrode 28b of the power storing element 25 is connected to the output terminal 71b of the rectifier circuit 23.

In the following description, a path that connects the output terminal 71a of the rectifier circuit 23 and the positive electrode 28a of the power storing element 25 may be referred to as a positive charging line 35a, and a path that connects the output terminal 71b of the rectifier circuit 23 and the negative electrode 28b of the power storing element 25 may be referred to as a negative charging line 35b.

The power storage 24 is a circuit in which the backflow prevention diode 80 and the first switching switch SW1 are inserted in series into the positive charging line 35a in this order from a side on which the rectifier circuit 23 is situated.

The backflow prevention diode 80 is a diode that is provided between the rectifier circuit 23 and the power storing element 25 and prevents backflow of current coming from the power storing element 25. A location at which the backflow prevention diode 80 is provided may be set discretionarily as long as the location is situated between the output terminal 71a of the rectifier circuit 23 and the positive electrode 28a of the power storing element 25. Further, a plurality of backflow prevention diodes 80 may be used, and, for example, another backflow prevention diode 80 may further be provided between the power storing element 225 and the first switching switch SW1.

For example, a diode of which leakage current flowing in the opposite direction is sufficiently smaller than current output by the rectifier circuit 23, is used as the backflow prevention diode 80. Moreover, a specific configuration of the backflow prevention diode 80 is not limited.

The first switching switch SW1 is a switch element that switches between an on state and an off state with respect to connection between the input terminal 5a and the output terminal 5b, according to a control signal input to the control terminal 5c. This makes it possible to provide and interrupt a path (the positive charging line 35a) between the rectifier circuit 23 and the power storing element 25. As described above, the first switching switch SW1 is arranged between the rectifier circuit 23 and the power storing element 25 and switches between an on state and an off state with respect to connection between the rectifier circuit 23 and the power storing element 25.

For example, a p-type metal-oxide-semiconductor field-effect transistor (MOSFET) is used as the first switching switch SW1. In this case, a voltage level of a control signal used to turn on a switch can be reduced. This makes it possible to reduce power consumption. Further, for example, a load switch may be used as the first switching switch SW1. This makes it possible to perform control on an on state and an off state of the positive charging line 35a with certainty.

Here, it is assumed that the first switching switch SW1 is turned on when the level of a control signal is low and the first switching switch SW1 is turned off when the level of the control signal is high.

The power storing element 25 is an element that stores therein power output by the power storage 24. Typically, a secondary battery is used as the power storing element 25. For example, a lithium-ion battery, a nickel-hydrogen battery, or a nickel cadmium battery can be used as the power storing element 25. Note that, for example, a capacitor may be used as the power storing element 25.

It is assumed that, in the following description, a lithium-ion battery is used as the power storing element 25. It is assumed that the battery has the characteristics in that a voltage of the battery in a state of being completely discharged (a voltage when a charge rate is 0%) is 1.5 V, a voltage of the battery in a state of being fully charged (a voltage when the charge rate is 100%) is 2.7 V, and an output voltage (the nominal voltage) is 2.3 V.

For example, in the case in which a voltage applied to the power storing element 25 is higher than or equal to a voltage of the power storing element 25 in a state of being completely discharged, the power storing element 25 starts to be charged. On the other hand, in the case in which the voltage applied to the power storing element 25 is higher than or equal to the allowable voltage (here, 2.7 V) in a state in which the power storing element 25 has been fully charged, the power storing element 25 is overcharged.

Note that the characteristics of the power storing element 25 are not limited to the example described above, and, for example, any power storing element 25 that has the characteristics of being able to be charged using the charging apparatus 100 may be used.

The charge controller 26 is provided with a detection terminal 10 that is connected to the output terminal 71a situated on a positive output side of the rectifier circuit 23, a GND terminal 13 that is connected to the output terminal 71b situated on a negative output side (on a GND side) of the rectifier circuit 23, and an output terminal 11 that is connected to the control terminal 5c of the first switching switch SW1. The charge controller 26 detects a voltage level of charge-use power induced between the detection terminal 10 and the GND terminal 13, and outputs a control signal depending on a result of the detection to the first switching switch SW1 through the output terminal 11.

In the present embodiment, the charge controller 26 detects an output voltage of the rectifier circuit 23 as the voltage level of charge-use power, and performs switching to turn on or off the first switching switch SW1 according to a result of the detection. Specifically, threshold determination is performed on the output voltage of the rectifier circuit 23, and a control signal (a binary signal of a low level and a high level) used to perform switching to turn on or off the first switching switch SW1 is output according to a result of the determination.

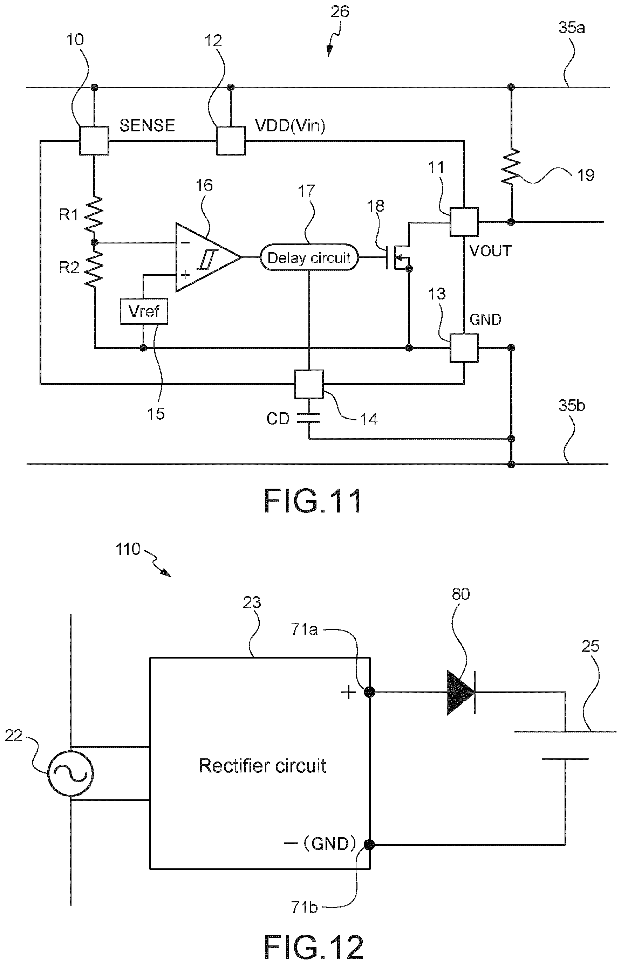

Fig. 11 is a circuit diagram illustrating an example of a configuration of the charge controller 26.

The charge controller 26 includes the detection terminal 10 (SENSE), the output terminal 11 (VOUT), a power supply terminal 12 (VDD(Vin)), the GND terminal 13 (GND), and an adjustment terminal 14.

Further, the charge controller 26 includes voltage detection resistances R1 and R2, a reference voltage source 15 (Vref), a voltage comparator 16, a delay circuit 17, an n-type transistor 18, a pull-up resistance 19, and a delay-use capacitor CD.

The charge controller 26 serves as a voltage detector that detects a voltage at the detection terminal 10 and outputs a control signal through the output terminal 11 according to a result of the detection.

The detection terminal 10 is a terminal that is connected to a monitoring-target voltage line. In the present embodiment, the detection terminal 10 is connected between the output terminal 71a of the rectifier circuit 23 and the anode of the backflow prevention diode 80, as illustrated in Fig. 10.

The output terminal 11 is a terminal that outputs a control signal. In the present embodiment, the output terminal 11 is connected to the control terminal 5c of the first switching switch SW1, as illustrated in Fig. 10.

The power supply terminal 12 is a terminal that is connected to a power supply of the charge controller 26. In the present embodiment, the power supply terminal 12 is connected between the output terminal 71a of the rectifier circuit 23 and the anode of the backflow prevention diode 80, as in the case of the detection terminal 10. Note that the detection terminal 10 can also serve as the power supply terminal 12.

As described above, the charge controller 26 is driven using output from the rectifier circuit 23 as a power supply. Thus, driving of the charge controller 26 does not result in consuming power stored in the power storing element 25. This makes it possible to store power efficiently without reducing power stored in the power storing element 25.

The GND terminal 13 is connected to the negative charging line 35b (a GND line).

The adjustment terminal 14 is connected to the negative charging line 35b (the GND line) through the delay-use capacitor CD.

The voltage detection resistances R1 and R2 are connected in series in this order between the detection terminal 10 and the GND terminal 13. Further, a negative input of the voltage comparator 16 is connected between R1 and R2.

The reference voltage source 15 is provided between a positive input of the voltage comparator 16 and the GND terminal 13, and outputs a specified reference voltage.

The voltage comparator 16 outputs a power-supply voltage level (a high level) when a voltage at the positive input is higher than a voltage at the negative input, and outputs a GND level (a low level) when the voltage at the positive input is lower than the voltage at the negative input.

As described above, the charge controller 26 is an element that detects (monitors) a voltage level using the voltage comparator 16. Further, an internal resistance of the charge controller 26, that is, a resistance of a detection system including the voltage comparator 16 is set to 2 MΩ or more. More favorably, the internal resistance of the charge controller 26 is set to 10 MΩ or more. This makes it possible to sufficiently reduce power consumed upon detecting voltage, and to sufficiently reduce the effect on storing of power.

The delay circuit 17 is connected between an output of the voltage comparator 16 and a gate of the n-type transistor 18. The delay circuit 17 is a circuit that keeps, for a certain period of time, a signal level output by the voltage comparator 16, that is, a circuit that delays switching between levels. This makes it possible to, for example, delay switching between levels of a control signal. Further, the delay-use capacitor CD used to adjust a delay time is connected to the delay circuit 17.

A source of the n-type transistor 18 is connected to the GND terminal 13, and a drain of the n-type transistor 18 is connected to the output terminal 11.

The pull-up resistance 19 is connected between the output terminal 11 and a power supply voltage (a line to which the detection terminal 10 and the power supply terminal 12 are connected).

A threshold voltage V1 used to control the first switching switch SW1 is set for the charge controller 26. V1 can be adjusted as appropriate by setting, for example, the reference voltage source 15 or the voltage detection resistances R1 and R2. In the following description, a voltage of the detection terminal 10 is referred to as a detected voltage Vs.

In the charge controller 26, a level of a control signal is low when the detected voltage Vs is lower than the threshold voltage V1 (V1>Vs). Further, the level of the control signal is high when the detected voltage Vs is higher than or equal to the threshold voltage V1 (V1≤Vs).

[Operation of Charging Apparatus 100]

The operation of the charging apparatus 100 according to the present embodiment is described with reference to Fig. 10.

In the present embodiment, a control signal (here, a high-level signal) used to turn off the first switching switch SW1 is output when the detected voltage Vs detected by the charge controller 26 exceeds the threshold voltage V1. In other words, the charge controller 26 turns off the first switching switch SW1 when an output voltage of the rectifier circuit 23 exceeds the threshold voltage V1 for the first switching switch SW1.

In the present embodiment, the threshold voltage V1 for the first switching switch SW1 is set to a voltage (2.7 V) of the power storing element 25 in a state of being fully charged.

First, a state in which the first switching switch SW1 is on, is discussed. In this case, the output terminal 71a of the rectifier circuit 23 is directly connected to the positive electrode 28a of the power storing element 25. Thus, a voltage at the output terminal 71a is equivalent to a voltage of the power storing element 25 since the voltage at the output terminal 71a is forced to get closer to the voltage of the power storing element 25. As described above, it can be said that the detected voltage Vs detected by the detection terminal 10 is a voltage of the power storing element 25 when the first switching switch SW1 is on.

For example, when charging of the power storing element 25 is not completed, a voltage (the detected voltage Vs) of the power storing element 25 is lower than or equal to a voltage of the power storing element 25 in a state of being fully charged. In this case, the first switching switch SW1 is kept on (a state in which the level of a control signal is low), and the power storing element 25 is charged with output from the rectifier circuit 23.

Further, a voltage (the detected voltage Vs) of the power storing element 25 increases as the power storing element 25 becomes more charged. Then, when the detected voltage Vs is higher than or equal to the threshold voltage V1, the level of a control signal becomes high, and the first switching switch SW1 is turned off.

As described above, the threshold voltage V1 is a voltage of the power storing element 25 in a state of being fully charged. Thus, it can also be said that charging of the power storing element 25 is stopped when the power storing element 25 is fully charged.

When the first switching switch SW1 is off, an output voltage of the rectifier circuit 23 is monitored by the charge controller 26. The output voltage of the rectifier circuit 23 increases or decreases according to electric field energy. Thus, for example, the output voltage may be lower than the threshold voltage V1. In this case, the first switching switch SW1 is turned on again. However, the first switching switch SW1 will be turned off at once if the power storing element 25 remains fully charged.

Further, when power stored in the power storing element 25 is consumed and the charge rate of the power storing element 25 is decreased, the first switching switch SW1 is turned on again. Then, charging is started again at this point.

Note that it is conceivable that, when the power storing element 25 starts to be charged, a voltage induced by the rectifier circuit 23 could be higher than the threshold voltage V1 (here, 2.7 V) set for the first switching switch. In this case, when the charge controller 26 and the first switching switch SW1 are operated immediately after charging is started, the first switching switch SW1 returns to the off state again, and then the power storing element 25 is not charged. For this reason, switching with respect to the first switching switch SW1 is performed in consideration of a voltage level for a certain period of time. For example, the charge controller 26 is kept on for at least a certain period of time after the first switching switch is turned on. The period of time for which the charge controller 26 is kept on is set as appropriate using, for example, the delay circuit 17 and delay capacitor CD being illustrated in Fig. 11.

This results in avoiding stopping charging immediately after the charging is started. This makes it possible to charge the power storing element 25 properly.

The configuration in which the detection terminal 10 (SENSE) provided to the charge controller 26 and the power supply terminal 12 (VDD(Vin)) are one terminal, has been described with reference to the example illustrated in Fig. 10. The detection terminal 10 and the power supply terminal 12 can also be provided separately from each other.

For example, the power supply terminal 12 may be connected to the output terminal 71a of the rectifier circuit 23, and the detection terminal 10 may be connected to an electrode (for example, the output terminal 5b) that passes through the first switching switch SW1 and is connected on a side of the positive electrode 28a of the power storing element 25. In this case, the voltage level of the power storing element 25 can be detected regardless of whether the first switching switch SW1 is on or off. This makes it possible to properly switch between an on state and an off state with respect to charging even when, for example, a time constant regarding switching between operations of the charge controller 26 is not set.

In the charging apparatus 100, the threshold voltage V1 used by the charge controller 26 is set to be a voltage of the power storing element 25 in a state of being fully charged, as described above. Thus, at a timing at which the detected voltage Vs becomes the voltage of the power storing element 25 in a state of being fully charged, a signal used to turn off the first switching switch SW1 is transmitted, and charging can be stopped. This results in avoiding overcharging the power storing element 25 before it happens, and thus in suppressing, for example, a degradation of the power storing element 25. This makes it possible to maintain the power storage performance of the power storing element 25 over a long period of time, and thus to efficiently store a wide range of electric field energy drawn through the antenna section 22.

As described above, the antenna section 22 including the first and second antenna conductors 31 and 32 is provided to the charging apparatus 100 according to the present embodiment. The first antenna conductor 31 is configured to be electrically coupled to the target 1 corresponding to the metallic body 3 or the human body 2, and the second antenna conductor 32 is configured to not be connected to the target. The use of such an antenna section 22 makes it possible to draw a wide range of electric field energy. Output from the antenna section 22 is rectified by the rectifier circuit 23. Further, charge-use power that is generated from the output from the rectifier circuit 23 is used to charge the power storing element 25. An operation of the charging is controlled according to a voltage level of the charge-use power. This makes it possible to efficiently store a wide range of electric field energy.

As described above, the antenna section 22 (the power receiver 21) according to the present embodiment has a dipole antenna structure used to capture electric field energy, and the first antenna conductor 31 serves as an energy harvesting apparatus of an electric-field type, the energy harvesting apparatus being used by being electrically coupled to the target 1 (a human body or a metallic body such as a refrigerator or a vehicle). When such a configuration is adopted for power generation, this exhibits the characteristics in that a voltage of an output signal is relatively high but current is small (refer to Figs. 15 and 16).

For example, with respect to a voltage induced through the antenna section 22, a voltage of about 5 V is obtained, although the obtained voltage differs depending on an antenna size. On the other hand, for example, a corresponding amount of current is about 1 $\mu$A, and power is about 5 $\mu$W.

As described above, current that can be drawn using the power receiver 21 is relatively small. Thus, it is important to store power without losing the current.

In the present embodiment, the first switching switch SW1 is provided between the power storing element 25 and the rectifier circuit 23, as illustrated in Fig. 10. Further, the first switching switch SW1 is kept on to continuously perform charging using the rectifier circuit 23 until the power storing element 25 is fully charged, and the first switching switch SW1 is turned off to stop charging when the power storing element 25 is fully charged.

This results in avoiding overcharging the power storing element 25, and thus in being able to maintain a power storage performance of the power storing element 25 at a high level. Consequently, an environment that ensures storing of power even with respect to a very small current can be kept for a long period of time.

This also makes it possible to avoid damaging the power storing element 25 and to avoid an unstable operation of the power storing element 25. This results in being able to improve the reliability and the robustness of an apparatus.

For example, a sensor or communication apparatus that keeps operating without being supplied with power can be obtained using energy harvesting. The application of the present technology to such an apparatus makes it possible to sufficiently maintain a performance of the power storing element 25 serving as a battery of an apparatus, and thus to reduce, for example, maintenance costs for the apparatus.

In the charging apparatus 100 described above, charging of the power storing element 25 using the antenna section 22 and the rectifier circuit 23 is controlled using the charge controller 26 and the first switching switch SW1. Without being limited thereto, a charging apparatus that does not include the charge controller 26 or the first switching switch SW1 can also be formed.

Fig. 12 is a circuit diagram illustrating another example of the configuration of the charging apparatus.

In a charging apparatus 110, the output terminal 71a of the rectifier circuit 23 is connected to the positive electrode 28a of the power storing element 25 through the backflow prevention diode 80. Further, the output terminal 71b of the rectifier circuit 23 is connected to the negative electrode 28b of the power storing element 25. Thus, a configuration of the charging apparatus 110 is obtained by removing the first switching switch SW1 and the charge controller 26 from the configuration of the charging apparatus 100 illustrated in Fig. 10.

For example, there is a possibility that, depending on a voltage (an output voltage of the rectifier circuit 23) induced by the antenna section 22, current will be consumed due to an internal resistance of the power storing element 25, and a voltage applied to the power storing element 25 by the antenna section 22 will not reach a voltage of the power storing element 25 in a state of being fully charged. In such a case, a voltage that causes the power storing element 25 to be overcharged is not applied. Thus, the configuration of the charging apparatus 110 without the first switching switch SW1 or the charge controller 26, may be adopted.

The charging apparatus 110 does not include the first switching switch SW1 or the charge controller 26. Thus, power generated by the antenna section 22 can be used to charge the power storing element 25 with no change. This makes it possible to efficiently charge the power storing element 25 without consuming a very small current unnecessarily.

<Second Embodiment>

A charging apparatus of a second embodiment according to the present technology is described. In the following description, descriptions of a configuration and an operation that are similar to those of the charging apparatus 100 described in the embodiment above are omitted or simplified.

[Configuration of Charging Apparatus 200]

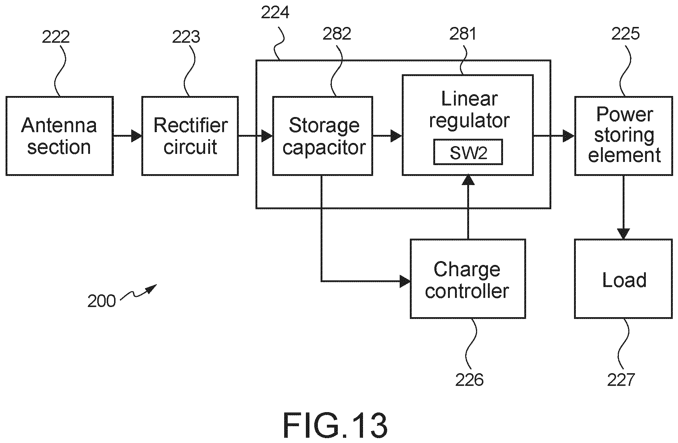

Fig. 13 is a block diagram illustrating an example of a configuration of the charging apparatus according to the second embodiment. As illustrated in Fig. 13, a charging apparatus 200 includes an antenna section 222, a rectifier circuit 223, a power storage 224, a power storing element 225, a charge controller 226, and a load 227.

The charging apparatus 200 has a configuration that is different from the configuration described in the embodiment above in primarily including the power storage 224 having a different configuration. Further, the antenna section 222, the rectifier circuit 223, the power storing element 225, the charge controller 226, and the load 227 respectively have configurations respectively similar to the configurations of the antenna section 22, the rectifier circuit 23, the power storing element 25, the charge controller 26, and the load 27 of the charging apparatus 100 described with reference to Figs. 9 and 10.

A storage capacitor 282 and a linear regulator 281 are provided to the power storage 224. The storage capacitor 282 is charged with output from the rectifier circuit 223. The linear regulator 281 adjusts power stored in the storage capacitor 282 to obtain a proper voltage, and the power storing element 225 is charged.

Further, in the present embodiment, the linear regulator 281 serves as a second switching switch SW2 that controls supply of charge-use power to the power storing element 225. Specifically, supply of power to the power storing element 225 is controlled by switching between an on state and an off state with respect to an operation of the linear regulator 281.

The charge controller 226 operates the linear regulator 281 (the second switching switch SW2) according to a voltage level of the storage capacitor 282.

Fig. 14 is a circuit diagram illustrating an example of the configuration of the charging apparatus 200 according to the second embodiment. Fig. 14 illustrates a specific circuit configuration of the power storage 224 that is included in the configuration of the charging apparatus 200. Note that an illustration of the load 227 is omitted in Fig. 14.

As illustrated in Fig. 14, the power storage 224 includes a backflow prevention diode 280, the linear regulator 281, the storage capacitor 282, and an adjustment capacitor 283. Further, the linear regulator 281 includes an input terminal 6a, an output terminal 6b, a control terminal 6c, and a GND terminal 6d.

In the present embodiment, the power storage 224 stores output from the rectifier circuit 223 in the storage capacitor 282 to generate charge-use power used to charge the power storing element 225. In other words, the power stored in the storage capacitor 282 is used as the charge-use power.

As illustrated in Fig. 14, an anode of the backflow prevention diode 280 is connected to the output terminal 71a of the rectifier circuit 223, and a cathode of the backflow prevention diode 280 is connected to the input terminal 6a of the linear regulator 281. The output terminal 6b of the linear regulator 281 is connected to the positive electrode 28a of the power storing element 225, and the GND terminal 6d is connected to the negative charging line 35b (the GND line). Further, the negative electrode 28b of the power storing element 225 is connected to the output terminal 71b of the rectifier circuit 223.

One of terminals of the storage capacitor 282 is connected to the positive charging line 35a between the backflow prevention diode 280 and the linear regulator 281 (the input terminal 6a), and another of the terminals is connected to the negative charging line 35b.

The adjustment capacitor 283 is connected between the control terminal 6c of the linear regulator 281 and the negative charging line 35b.

The detection terminal 10 (the power supply terminal 12) of the charge controller 226 is connected between the output terminal 71a of the rectifier circuit 223 and the anode of the backflow prevention diode 280, the GND terminal 13 is connected to the negative charging line 35b, and the output terminal 11 is connected to the control terminal 6c of the linear regulator 281.

The backflow prevention diode 280 is a diode that is provided between the rectifier circuit 223 and the power storing element 225 and prevents backflow of current coming from the power storing element 225. A location at which the backflow prevention diode 280 is provided may be set discretionarily as long as the location is situated between the output terminal 71a of the rectifier circuit 223 and the positive electrode 28a of the power storing element 225. Further, a plurality of backflow prevention diodes 280 may be used, and, for example, another backflow prevention diode 280 may further be provided between the power storing element 225 and the linear regulator 281.

For example, the backflow prevention diode 280 has a configuration similar to the configuration of the backflow prevention diode 80 described with reference to Fig. 10.

15

The linear regulator 281 is an element that adjusts, to a set voltage Va, a voltage input to the input terminal 6a, and outputs the adjusted voltage through the output terminal 6b. More specifically, the input voltage higher than the set voltage Va for the linear regulator 281 is adjusted to the set voltage Va, and the input voltage lower than the set voltage Va is output as a voltage corresponding to a value of the input voltage.

As illustrated in Fig. 14, the linear regulator 281 is connected between the storage capacitor 282 and the power storing element 225. Thus, the linear regulator 281 adjusts a voltage of the storage capacitor 282 to apply the adjusted voltage to the power storing element 225.

In the present embodiment, the linear regulator 281 is an example of a voltage adjustment element that adjusts a voltage of charge-use power.

Further, the linear regulator 281 is driven using output from the rectifier circuit 223 as a power supply. For example, the linear regulator 281 is driven by acquiring power from the input terminal 6a. Thus, driving of the linear regulator 281 does not result in consuming power stored in the power storing element 225. This makes it possible to store power efficiently without reducing power stored in the power storing element 225.

Further, the control terminal 6c is provided to the linear regulator 281, as described above. The linear regulator 281 is configured such that switching between an on state and an off state with respect to an operation of adjusting a voltage can be performed according to a control signal input to the control terminal 6c.

When an operation state of the linear regulator 281 is an off state, the linear regulator 281 is an element in which power consumption is nearly zero, an input resistance is sufficiently high, and current is not allowed to pass through the element. It is favorable that, when the linear regulator 281 is not in operation, the resistance be high in order to not consume current.

Here, it is assumed that a state of the operation of the linear regulator 281 is an off state when a control signal is a low-level signal, and the state of the operation of the linear regulator 281 is an on state when the control signal is a high-level signal.

The storage capacitor 282 is a capacitor that stores therein output from the rectifier circuit 223 and supplies the stored output to the linear regulator 281. As illustrated in Fig. 14, the storage capacitor 282 is situated on the input side of the linear regulator 281 and formed by parallel connection. In other words, the storage capacitor 282 is charged with the output from the rectifier circuit 223 before the output is input to the linear regulator 281. As described above, power charged to the storage capacitor 282 is used as charge-use power used to charge the power storing element 225.

The adjustment capacitor 283 is a capacitor that is charged by a control signal output by the charge controller 226. For example, the adjustment capacitor 283 is charged when a high-level control signal is output. For example, the control terminal 6c of the linear regulator 281 is supplied with a constant voltage due to power stored in the adjustment capacitor 283 after the level of the control signal becomes low. For example, the supply of the voltage is continuously performed until the adjustment capacitor 283 is completely discharged.

This makes it possible to maintain, for a certain period of time, a state similar to a state in which a control signal is added to the control terminal 6c. As described above, the adjustment capacitor 283 includes a function of prolonging an effect of a control signal by a certain period of time. This period of time by which the effect is prolonged can be changed by setting capacitance of the adjustment capacitor 283.

Here, the period of time by which the effect is prolonged is set only using the capacitance of the adjustment capacitor 283. In addition, resistances may be connected in series in a line (a line that connects the output terminal 11 of the charge controller 226 and the control terminal 6c of the linear regulator 281) through which a control signal is transmitted to form an RC circuit. In this case, the period of time by which the effect is prolonged can be set according to, for example, a time constant of the RC circuit.

The charge controller 226 detects a voltage level of charge-use power, and outputs a control signal depending on a result of the detection to the linear regulator 281.

In the present embodiment, the charge controller 226 detects a voltage of the storage capacitor 282 as the voltage level of charge-use power, and performs switching to turn on or off the linear regulator 281 according to a result of the detection.

Specifically, a threshold voltage V2 used to control the linear regulator 281 is set, and, using the threshold voltage V2, threshold determination is performed on a voltage (the detected voltage Vs) of the storage capacitor 282 that is detected by the detection terminal 10.

In the present embodiment, when the detected voltage Vs is lower than the threshold voltage V2 (V2>Vs), a level of a control signal is low, and the linear regulator 281 is turned off. Further, when the detected voltage Vs is higher than or equal to the threshold voltage V2 (V2≤Vs), the level of the control signal is high, and the linear regulator 281 is turned on.

In other words, the high-level control signal and the low-level control signal are control signals that respectively turn on and off the linear regulator 281. As described above, the charge controller 226 outputs a control signal used to turn on the linear regulator 281. The adjustment capacitor 283 described above is charged by this signal.

Here, an amount of current used to charge the power storing element 225 in the charging apparatus 200 is described.

Fig. 15 is a schematic graph on which temporal changes in a charge voltage and a charge current in performing charging by a CV approach are given.

The constant voltage (CV) approach is a charging approach in which the power storing element 225 (a battery) is charged with a constant voltage. For example, charging can be performed by the CV approach when charging is performed using the linear regulator 281.

A horizontal axis of the graph illustrated in Fig. 15 represents time. Further, line graphs that respectively show a rough form representing a temporal change in a voltage (a charge voltage) of the power storing element 225 due to charging being performed by the CV approach, and a rough form representing a temporal change in current (a charge current) used to charge the power storing element 225 are given on the graph.

When the power storing element 225 is charged by the CV approach, the charge voltage increases rapidly when the charging is started, and, in a relatively early stage, the charge voltage reaches a level similar to a level of voltage used to perform charging. On the other hand, an amount of current used to charge the power storing element 225 decreases gradually as the power storing element 225 gets closer to a state of being fully charged.

In the following description, an amount of current used to perform charging in the charging apparatus 200 is obtained on the basis of data obtained upon charging the power storing element 225 by the CV approach.

Fig. 16 is a graph on which a relationship between a charge voltage and a charge rate in performing charging by the CV approach is given. A horizontal axis of the graph represents a charge rate at which the power storing element 225 is charged, and a vertical axis of the graph represents a charge voltage. This graph shows measurement of the charge voltage at 30-minute intervals, where the measurement is started in a state in which the charge rate is 0%.

Here, a curve of charging at a constant voltage of 2.7 V when 1C = 1.4 mA is plotted, where a battery (the power storing element 225) of which the nominal capacitance is 14 mAh was a charging target. Note that 1C was set to one-tenth of a value of current of the nominal capacitance. In this case, it took 15 minutes for the charge rate to reach 5%, where a voltage at that time was 2.21 V.

In other words, an amount of current necessary for the charge rate of the power storing element 225 to reach 5% (the charge voltage of 2.21 V) from the charge rate of 0% (the charge voltage of 2.1 V), can be obtained using "1.4 mA $\times$ 15 min.".

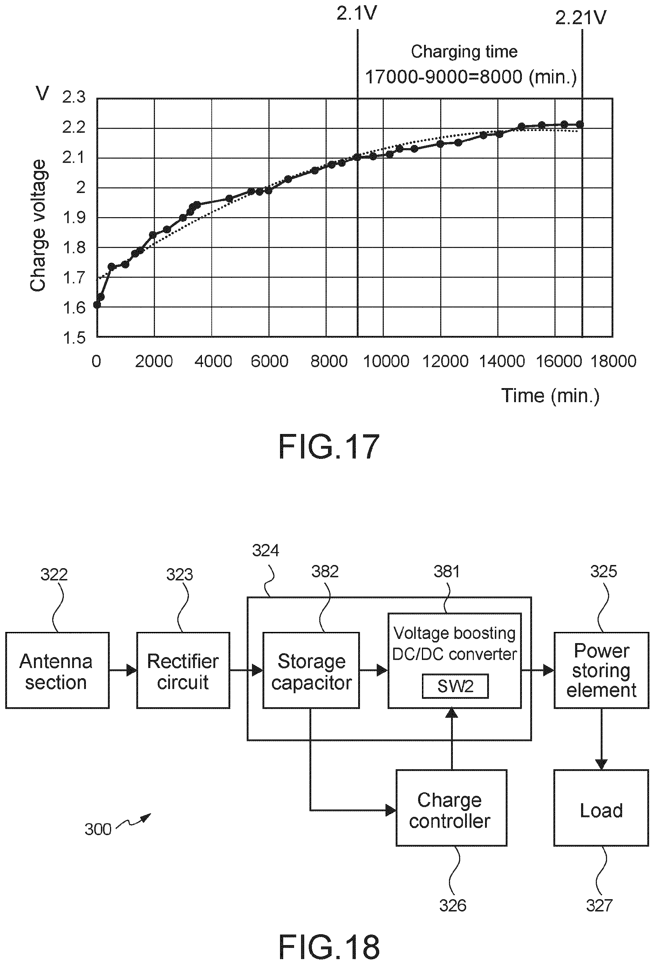

Fig. 17 is a graph on which charging characteristics of the charging apparatus 200 upon performing actual charging are given. A horizontal axis of the graph represents time, and a vertical axis of the graph represents a charge voltage. Data of a temporal change in a charge voltage when the power storing element 225 is actually charged in a state in which a voltage signal of about 4 V is induced in the antenna section 222 serving as a harvester, is plotted on the graph. Further, a fitted curve of such charging characteristics is illustrated using a dotted line.

Here, the time necessary to perform charging equivalent to charging performed using the current amount calculated in Fig. 16, that is, the time necessary for the charge voltage to reach 2.21 V from 2.1 V is obtained. A difference between the time taken to reach 2.21 V (17000 min.) and the time taken to reach 2.1 V (9000 min.) is 8000 min. Thus, current used to perform actual charging per unit of time is obtained using "1.4 mA $\times$ (15 min. / 8000 min.)", and thus about 2.6 $\mu$A is calculated. Further, current consumed by the power storage 224 serving as a charging circuit is estimated to be 0.5 $\mu$A. Thus, current output by the power receiver (the antenna section 222 and the rectifier circuit 223) serving as a harvester is about 3 $\mu$A.

As described above, current that can be drawn using the power receiver is small.

[Operation of Charging Apparatus 200]

An operation of the charging apparatus 200 according to the present embodiment is described with reference to Fig. 14.

In the present embodiment, a control signal (here, a high-level signal) used to turn on the linear regulator 281 is output when the detected voltage Vs detected by the charge controller 226 exceeds the threshold voltage V2. In other words, the charge controller 226 turns on the linear regulator 281 when a voltage of the storage capacitor 282 exceeds the threshold voltage V2 for the linear regulator 281.

For example, the set voltage Va for the linear regulator 281 is set to be a voltage of the power storing element 225 in a state of being fully charged. This makes it possible to efficiently charge the power storing element 225.

Further, the threshold voltage V2 set for the charge controller 226 is set to be a voltage higher than the set voltage Va for the linear regulator 281. Specifically, the threshold voltage V2 is set to a value that is slightly larger than a value of the set voltage Va. For example, a value that is 1% to 10% and more favorably 3% to 5% larger than the value of the set voltage Va for the linear regulator 281 is used as the value of the threshold voltage V2. This makes it possible to reduce power consumption in the linear regulator 281, and thus to efficiently charge power output by the antenna section 222.

For example, the set voltage Va for the linear regulator 281 is set to 2.7 V, and the threshold voltage V2 is set to 2.8 V, which is 0.1 V higher than the set voltage Va.

Note that, when the set voltage Va for the linear regulator 281 is set low, the threshold voltage V2 may be set low accordingly. For example, when the set voltage Va is 2.6 V, the threshold voltage V2 may be set to 2.7 V. Moreover, methods for setting the set voltage Va and the threshold voltage V2 are not limited.

For example, the linear regulator 281 is off when the voltage (Vs) of the storage capacitor 282 is lower than the threshold voltage V2. In such a state, power output by the rectifier circuit 223 is charged to the storage capacitor 282 without passing through the linear regulator 281.

At this point, the linear regulator 281 is not in operation. This results in avoiding consuming current wastefully, and thus in improving the efficiency in charging the storage capacitor 282.

When the voltage (Vs) of the storage capacitor 282 increases and exceeds the threshold voltage V2, a control signal used to turn on the linear regulator 281 is output by the charge controller 226, and the linear regulator 281 is started. Consequently, a voltage of power stored in the storage capacitor 282 is adjusted, and the power storing element 225 is charged with the power. Here, the power storing element 225 is charged with power corresponding to 2.7 V, which is set to be the output voltage Va of the linear regulator 281. This makes it possible to charge the power storing element 225 with certainty.

As described above, current that can be acquired from the antenna section 222 is small. For example, a configuration in which the linear regulator 281 is on at all times and the storage capacitor 282 is not provided, is discussed. In this case, output from the rectifier circuit 223 is input to the linear regulator 281. Here, current is small even when a voltage corresponding to the input power is at a level that enables the linear regulator 281 to operate. Thus, the current may be consumed by the linear regulator 281. In this case, current is not supplied to the power storing element 225.

Thus, the present embodiment adopts a configuration in which storing of a certain amount of power in the storage capacitor 282 is detected using the charge controller 226 and the linear regulator 281 is operated. When a charging operation is performed by the linear regulator 281 in a state in which the storage capacitor 282 stores therein a sufficient amount of power, this makes it possible to perform charging stably.

Further, the linear regulator 281 does not operate until power is accumulated in the storage capacitor 282, that is, until a voltage of the capacitor 282 reaches the threshold voltage V2. Thus, power consumption can be reduced. This makes it possible to store power in the storage capacitor 282 without waste, and to greatly improve the efficiency in storing power.

Here, an operation of the adjustment capacitor 283 is described.

The adjustment capacitor 283 controls the time for the operation of the linear regulator 281. Specifically, after a voltage of the storage capacitor 282 decreases up to a lower-limit voltage in a voltage range that enables power stored in the storage capacitor 282 to be supplied to the power storing element 225 properly, the capacitance of the adjustment capacitor 283 is adjusted such that the linear regulator 281 is turned off.

As described above, the capacitance of the adjustment capacitor 283 is set such that, until a voltage of the storage capacitor 282 decreases up to a specified voltage, a voltage state at the control terminal 6c is equivalent to the voltage state at the control terminal 6c at the time of input of a control signal to the control terminal 6c.

Here, the specified voltage refers to, for example, a lower-limit voltage that enables power in the storage capacitor 282 to be charged to the power storing element 225. Accordingly, when a voltage of the storage capacitor 282 is in a range in which the storage capacitor 282 can perform charging, the linear regulator 281 can be kept on. This results in avoiding unnecessarily performing switching to turn on or off the linear regulator 281, and thus in being able to perform a stable charging operation.

For example, capacitance of the storage capacitor 282 storing therein electric charges is set to 47 μF, and the capacitance of the adjustment capacitor 283 controlling the time for the operation of the linear regulator 281 is set to 1 μF. This makes it possible to perform a stable charging operation.

The capacitance of the storage capacitor 282 and the capacitance of the adjustment capacitor 283 are not limited to the examples described above, and may be set as appropriate according to, for example, characteristics of the antenna section 222 and characteristics of the power storing element 225. Further, an RC circuit obtained by connecting resistances in series in a line through which a control signal is transmitted may be provided to set the time for the operation of the linear regulator 281.

Further, the adjustment capacitor 283 does not necessarily have to be provided, and the time for the operation of the linear regulator 281 may be controlled by a method other than the method using the adjustment capacitor 283.

In the description above, the threshold voltage V2 used by the charge controller 226 is set to 2.8 V, and the time for the operation of the linear regulator 281 is defined using the adjustment capacitor 283. Without being limited thereto, for example, a charge controller for which two threshold voltages can be set may be used. In this case, for example, control to turn on the linear regulator 281 when the detected voltage Vs increases up to 2.8 V or more, and to turn off the linear regulator 281 when the detected voltage Vs decreases up to 2.0 V or less, is performed. This makes it possible to control the time for the operation of the linear regulator 281 without using the adjustment capacitor 283.

As described with reference to Figs. 16 and 17, when current used to perform charging is small, the small current is consumed upon energy exchange such as voltage adjustment unless input resistance is very high. This results in difficulty in storing electric charges in, for example, a battery.

For example, from among voltage decreasing DC/DC converters, there is an element that can also be used when an input resistance is high and current is small. On the other hand, when voltage decreasing converters are used, there is a need to decrease the level of a high voltage of a signal such that a charge voltage necessary to charge a battery is obtained. For example, there is normally a difficulty in performing a charging operation unless a voltage input to a voltage decreasing converter is 0.5 V or more higher than a voltage necessary to charge a battery. As described above, it is necessary that a harvester achieve performance beyond a charge voltage of a battery. This results in narrowing a usable range.

On the other hand, the storage capacitor 282 storing therein output from the rectifier circuit 223, and the linear regulator 281 charging power stored in the storage capacitor 282 to the power storing element 225 are provided to the charging apparatus 200 according to the present embodiment. Further, the charge controller 226 turns on the linear regulator 281 when the voltage Vs in the storage capacitor 282 exceeds the threshold voltage V2.

The linear regulator 281 can operate stably if an input voltage is slightly higher than the set voltage Va for the linear regulator 281. Further, even if the input voltage Vs is lower than the set voltage Va, the charging operation can be continuously performed. Furthermore, the provision of the storage capacitor 282 makes it possible to perform the charging operation stably. Consequently, even when, for example, a voltage of a signal obtained from the antenna section 222 is relatively low or the intensity of an electric field is unstable, charging can be performed using a very small current. This makes it possible to efficiently store a wide range of electric field energy.

<Third Embodiment>

[Configuration of Charging Apparatus 300]

Fig. 18 is a block diagram illustrating an example of a configuration of a charging apparatus according to a third embodiment. As illustrated in Fig. 18, a charging apparatus 300 includes an antenna section 322, a rectifier circuit 323, a power storage 324, a power storing element 325, a charge controller 326, and a load 327.

The charging apparatus 300 has a configuration that is different from the configuration described in the embodiments above in primarily including the power storage 324 having a different configuration. Further, the antenna section 322, the rectifier circuit 323, the power storing element 325, the charge controller 326, and the load 327 respectively have configurations respectively similar to the configurations of the antenna section 22, the rectifier circuit 23, the power storing element 25, the charge controller 26, and the load 27 of the charging apparatus 100 described with reference to Figs. 9 and 10.

The charging apparatus 300 has a configuration obtained on the assumption that, for example, a voltage level of power captured by the antenna section 322 is relatively low (for example, 1 V or lower).

A storage capacitor 382 and a voltage boosting DC/DC converter 381 are provided to the power storage 324. The storage capacitor 382 is charged with output from the rectifier circuit 323. The voltage boosting DC/DC converter 381 boosts a voltage corresponding to power stored in the storage capacitor 382, and the power storing element 325 is charged.

Further, in the present embodiment, the voltage boosting DC/DC converter 381 serves as the second switching switch SW2 controlling supply of charge-use power to the power storing element 25. Specifically, supply of power to the power storing element 325 is controlled by switching between an on state and an off state with respect to an operation of the voltage boosting DC/DC converter 381.

The charge controller 326 operates the voltage boosting DC/DC converter 381 (the second switching switch SW2) according to a voltage level of the storage capacitor 382.

Fig. 19 is a circuit diagram illustrating an example of the configuration of the charging apparatus 300 according to the third embodiment. Fig. 19 illustrates a specific circuit configuration of the power storage 324 that is included in the configuration of the charging apparatus 300. Note that an illustration of the load 327 is omitted in Fig. 19.

As illustrated in Fig. 19, the power storage 324 includes a backflow prevention diode 380, the voltage boosting DC/DC converter 381, a storage capacitor 382, and an adjustment capacitor 383. Further, the voltage boosting DC/DC converter 381 includes an input terminal 7a, an output terminal 7b, a control terminal 7c, and a GND terminal 7d.

In the present embodiment, the power storage 324 stores output from the rectifier circuit 323 in the storage capacitor 382 to generate charge-use power used to charge the power storing element 325. In other words, the power stored in the storage capacitor 382 is used as the charge-use power.

As illustrated in Fig. 19, the power storage 324 has a circuit configuration in which the voltage boosting DC/DC converter 381 is used instead of the linear regulator 281 of the power storage 224 described with reference to Fig. 14.

An anode of the backflow prevention diode 380 is connected to the output terminal 71a of the rectifier circuit 323, and a cathode of the backflow prevention diode 380 is connected to the input terminal 7a of the voltage boosting DC/DC converter 381. The output terminal 7b of the voltage boosting DC/DC converter 381 is connected to the positive electrode 28a of the power storing element 325, and the GND terminal 7d is connected to the negative charging line 35b (the GND line). Further, the negative electrode 28b of the power storing element 325 is connected to the output terminal 71b of the rectifier circuit 323.

One of terminals of the storage capacitor 382 is connected to the positive charging line 35a between the backflow prevention diode 380 and the voltage boosting DC/DC converter 381 (the input terminal 7a), and another of the terminals is connected to the negative charging line 35b.

The adjustment capacitor 383 is connected between the control terminal 7c of the voltage boosting DC/DC converter 381 and the negative charging line 35b.

The detection terminal 10 (the power supply terminal 12) of the charge controller 326 is connected between the output terminal 71a of the rectifier circuit 323 and the anode of the backflow prevention diode 380, the GND terminal 13 is connected to the negative charging line 35b, and the output terminal 11 is connected to the control terminal 7c of the voltage boosting DC/DC converter 381.

The backflow prevention diode 380 is a diode that is provided between the rectifier circuit 323 and the power storing element 325 and prevents backflow of current coming from the power storing element 325. A location at which the backflow prevention diode 380 is provided may be set discretionarily as long as the location is situated between the output terminal 71a of the rectifier circuit 323 and the positive electrode 28a of the power storing element 325. Further, a plurality of backflow prevention diodes 380 may be used, and, for example, another backflow prevention diode 380 may further be provided between the power storing element 325 and the linear regulator 381.

For example, the backflow prevention diode 380 has a configuration similar to the configuration of the backflow prevention diode 80 described with reference to Fig. 10.

The voltage boosting DC/DC converter 381 is an element that boosts a voltage input to the input terminal 7a, and outputs the boosted voltage through the output terminal 7b. A minimum boost voltage that can be boosted by the voltage boosting DC/DC converter 381 is defined for the voltage boosting DC/DC converter 381, and the voltage boosting DC/DC converter 381 boosts a voltage that exceeds the minimum boost voltage to a specified output voltage.

As illustrated in Fig. 19, the voltage boosting DC/DC converter 381 is connected between the storage capacitor 382 and the power storing element 325. Thus, the voltage boosting DC/DC converter 381 boosts a voltage of the storage capacitor 382 to apply the boosted voltage to the power storing element 325. In the present embodiment, the voltage boosting DC/DC converter 381 is an example of the voltage adjustment element adjusting a voltage of charge-use power, and corresponds to a voltage boosting converter.

Further, the voltage boosting DC/DC converter 381 is driven using output from the rectifier circuit 323 as a power supply. For example, the voltage boosting DC/DC converter 381 is driven by acquiring power from the input terminal 7a. Thus, driving of the voltage boosting DC/DC converter 381 does not result in consuming power stored in the power storing element 325. This makes it possible to store power efficiently without reducing power stored in the power storing element 325.

Further, the control terminal 7c is provided to the voltage boosting DC/DC converter 381, as described above. The voltage boosting DC/DC converter 381 is configured such that switching between an on state and an off state with respect to an operation of boosting voltage can be performed according to a control signal input to the control terminal 7c. When an operation state of the voltage boosting DC/DC converter 381 is an off state, the voltage boosting DC/DC converter 381 is an element in which power consumption is nearly zero, an input resistance is sufficiently high, and current is not allowed to pass through the element. It is favorable that, when the voltage boosting DC/DC converter 381 is not in operation, the resistance be high in order to not consume current.

Here, it is assumed that a state of the operation of the voltage boosting DC/DC converter 381 is an off state when a control signal is a low-level signal, and the state of the operation of the voltage boosting DC/DC converter 381 is an on state when the control signal is a high-level signal.

The storage capacitor 382 is a capacitor that stores therein output from the rectifier circuit 323 and supplies the stored output to the voltage boosting DC/DC converter 381. Power charged to the storage capacitor 382 is used as charge-use power used to charge the power storing element 325.

The adjustment capacitor 383 is a capacitor that is charged by a control signal output by the charge controller 326. For example, the adjustment capacitor 383 is charged by a high-level control signal, and the control terminal 7c of the voltage boosting DC/DC converter 381 is continuously supplied with a constant voltage after the level of the control signal becomes low. For example, the adjustment capacitor 383 has a function similar to, for example, a function of the adjustment capacitor 283 described with reference to Fig. 14.

The charge controller 326 detects a voltage level of charge-use power, and outputs a control signal depending on a result of the detection to the voltage boosting DC/DC converter 381.

In the present embodiment, the charge controller 326 detects a voltage of the storage capacitor 382 as the voltage level of charge-use power, and performs switching to turn on or off the voltage boosting DC/DC converter 381 according to a result of the detection.

Specifically, a threshold voltage V3 used to control the voltage boosting DC/DC converter 381 is set, and, using the threshold voltage V3, threshold determination is performed on a voltage (the detected voltage Vs) of the storage capacitor 382 that is detected by the detection terminal 10.

In the present embodiment, when the detected voltage Vs is lower than the threshold voltage V3 (V3>Vs), a level of a control signal is low, and the voltage boosting DC/DC converter 381 is turned off. Further, when the detected voltage Vs is higher than or equal to the threshold voltage V3 (V3≤Vs), the level of the control signal is high, and the voltage boosting DC/DC converter 381 is turned on.

In other words, the high-level control signal and the low-level control signal are control signals that respectively turn on and off the voltage boosting DC/DC converter 381. As described above, the charge controller 326 outputs a control signal used to turn on the voltage boosting DC/DC converter 381. The adjustment capacitor 383 described above is charged by this signal.

[Operation of Charging Apparatus 300]

An operation of the charging apparatus 300 according to the present embodiment is described with reference to Fig. 19.

In the present embodiment, a control signal (here, a high-level signal) used to turn on the voltage boosting DC/DC converter 381 is output when the detected voltage Vs detected by the charge controller 326 exceeds the threshold voltage V3. In other words, the charge controller 326 turns on the voltage boosting DC/DC converter 381 when a voltage of the storage capacitor 382 exceeds the threshold voltage V3 for the voltage boosting DC/DC converter 381.

In the present embodiment, an output voltage of the voltage boosting DC/DC converter 381 is set to be, for example, a voltage (2.7 V) of the power storing element 325 in a state of being fully charged. In this case, the voltage boosting DC/DC converter 381 for which the minimum boost voltage is about 0.5 V is used.

Further, the threshold voltage V3 for the voltage boosting DC/DC converter 381 is set higher than the minimum boost voltage that can be boosted by the voltage boosting DC/DC converter 381, and lower than the output voltage of the voltage boosting DC/DC converter 381. Here, V3 is set such that V3 = 1 V. Moreover, the method for setting the threshold voltage V3 is not limited.

For example, the storage capacitor 382 is off when the voltage (Vs) of the storage capacitor 382 is lower than the threshold voltage V3. In such a state, power output by the rectifier circuit 323 is charged to the storage capacitor 382 without passing through the storage capacitor 382.

At this point, the voltage boosting DC/DC converter 381 is not in operation. This results in avoiding consuming current wastefully, and thus in improving the efficiency in charging the storage capacitor 382.

When the voltage (Vs) of the storage capacitor 382 increases and exceeds the threshold voltage V3, a control signal used to turn on the voltage boosting DC/DC converter 381 is output by the charge controller 326, and the voltage boosting DC/DC converter 381 is started. Consequently, a voltage of power stored in the storage capacitor 382 is boosted up to charge-use voltage, and the power storing element 325 is charged with the power. Here, voltage, in the storage capacitor 382, which is lower than or equal to 1 V, is boosted up to 2.7 V, and the power storing element 325 is charged.

Here, a relationship between power consumption of the voltage boosting DC/DC converter 381 and capacitance of the storage capacitor 382 is described.

When a voltage of a capacitor having a capacitance C is represented by V, energy E (an amount of power) stored in the capacitor is represented using Formula (1) indicated below.

$$\mathrm{E[J]=0.5 \times C \times V^2} \quad (1)$$

Further, a relationship between power P and the energy E (the amount of power) is represented using Formula (2) indicated below.

$$\mathrm{E[J]=t[sec] \times P[W]} \quad (2)$$

For example, it is assumed that a voltage induced by the antenna section 322 is 1 V. In this case, power of a minimum boost voltage (here, 0.5 V) is consumed due to voltage boosting operation. Here, electric charges corresponding to a difference between the voltage induced by the antenna section 322 and the minimum boost voltage (1 V - 0.5 V) are electric charges with which charging can be performed.

It is assumed that energy of electric charges at this point is stored in the storage capacitor 382. For example, the energy E stored in the storage capacitor 382 is calculated using Formula (1), where the capacitance of the storage capacitor 382 is 100 μF.

$$E=0.5×100[\mu F]×0.5[V]×0.5[V]=12.5[\mu J]$$

The calculated energy is converted into power P per one second using Formula (2), and 12.5 $\mu$W is obtained.

Here, with respect to the voltage boosting DC/DC converter 381 being capable of boosting a voltage of 0.5 V or more and exhibiting output of 2.7 V, an estimated power for starting such a voltage boosting DC/DC converter 381 is about 9 $\mu$W. In the above-described voltage boosting DC/DC converter 381 for which 9 $\mu$W is used as a starting power, the voltage boosting DC/DC converter 381 can be started but will not perform the voltage boosting operation properly if power of the storage capacitor 382 is about 12.5 $\mu$W. Thus, it may be difficult to use such a voltage boosting DC/DC converter 381 to perform charging. When the power storing element 325 is charged, it is favorable that, for example, the storage capacitor 382 of at least a capacitance three or more times larger than the capacitance described above, that is, the storage capacitor 382 of a capacitance of 0.3 mF or more be used.

In the present embodiment, the capacitance of the storage capacitor 382 is set such that the storage capacitor 382 can store therein, for example, at least three times more power, compared to power consumed by the voltage boosting DC/DC converter 381. More favorably, the capacitance of the storage capacitor 382 is set such that the storage capacitor 382 can store therein at least ten times more power, compared to power consumed by the voltage boosting DC/DC converter 381.

This makes it possible to store, in the power storing element 325, power stored in the storage capacitor 382 without waste, using the voltage boosting DC/DC converter 381.

For example, the voltage boosting DC/DC converter 381 has the characteristics in that power consumption is increased upon starting, compared to when it is in a steady state operation. Thus, unnecessary power consumption is increased as the number of times that the voltage boosting DC/DC converter 381 starts is increased. On the other hand, a sufficient increase in the capacitance of the storage capacitor 382 results in a reduction in the number of times that switching is performed to turn on or off the voltage boosting DC/DC converter 381. This makes it possible to reduce unnecessary power consumption.

For example, an electric double-layer capacitor is used as such a large-capacitance storage capacitor 382. Further, a configuration in which the capacitance is increased by a plurality of capacitors being connected in parallel to each other, can also be adopted.

The adjustment capacitor 383 controls the time for the operation of the voltage boosting DC/DC converter 381. Specifically, capacitance of the adjustment capacitor 383 is set such that, until a voltage of the storage capacitor 382 decreases up to a specified voltage, a voltage state at the control terminal 7c is equivalent to the voltage state at the control terminal 7c at the time of input of a control signal to the control terminal 7c.

Here, the specified voltage is set to be, for example, a voltage that is slightly higher than the minimum boost voltage for the voltage boosting DC/DC converter 381 (for example, a voltage that is 5% to 10% higher than the minimum boost voltage). This makes it possible to charge power stored in the storage capacitor 382 to the power storing element 325 in a range in which voltage boosting can be performed with certainty.

In the description above, the threshold voltage V3 used by the charge controller 326 is set to 1.0 V, and the time for the operation of the voltage boosting DC/DC converter 381 is defined using the adjustment capacitor 383. Without being limited thereto, for example, the charge controller 326 for which two threshold voltages can be set may be used. In this case, for example, control to turn on the voltage boosting DC/DC converter 381 when the detected voltage Vs increases up to 1.0 V or more, and to turn off the voltage boosting DC/DC converter 381 when the detected voltage Vs decreases up to 0.5 V or less, is performed.

Further, when, for example, a power-good terminal is provided to the voltage boosting DC/DC converter 381, processing of turning off the voltage boosting DC/DC converter 381 as a result of referring to output from the power-good terminal may be performed.

The configuration in which the second switching switch SW2 used to switch between an on state and an off state with respect to the operation of the voltage boosting DC/DC converter 381 is built in the voltage boosting DC/DC converter 381 of the charging apparatus 300 described above, has been described.

For example, there is a possibility that the second switching switch SW2 used to switch between an on state and an off state with respect to the operation of the voltage boosting DC/DC converter 381 will not be built in the voltage boosting DC/DC converter 381. In this case, the second switching switch SW2 used to perform switching with respect to the operation may be separately provided on the input side of the input terminal 7a of the voltage boosting DC/DC converter 381. In such a configuration, a control signal provided by the charge controller 326 is output to SW2, which performs switching with respect to the operation, and SW2 is turned on or off appropriately. This makes it possible to operate the voltage boosting DC/DC converter 381 properly.

As described above, the present embodiment adopts a configuration in which, since current that can be acquired from the antenna section 322 is small, storing of a certain amount of power in the storage capacitor 382 is detected using the charge controller 326 and the voltage boosting DC/DC converter 381 is operated. When a charging operation is performed by the voltage boosting DC/DC converter 381 in a state in which the storage capacitor 282 stores therein a sufficient amount of power, this makes it possible to perform charging stably. Further, the voltage boosting DC/DC converter 381 consumes a large amount of current upon voltage boosting. Thus, the capacitance of the storage capacitor 382 is set sufficiently large. This results in a reduction in unnecessary power consumption. This makes it possible to efficiently store a wide range of electric field energy.

<Fourth Embodiment>

[Configuration of Charging Apparatus 400]

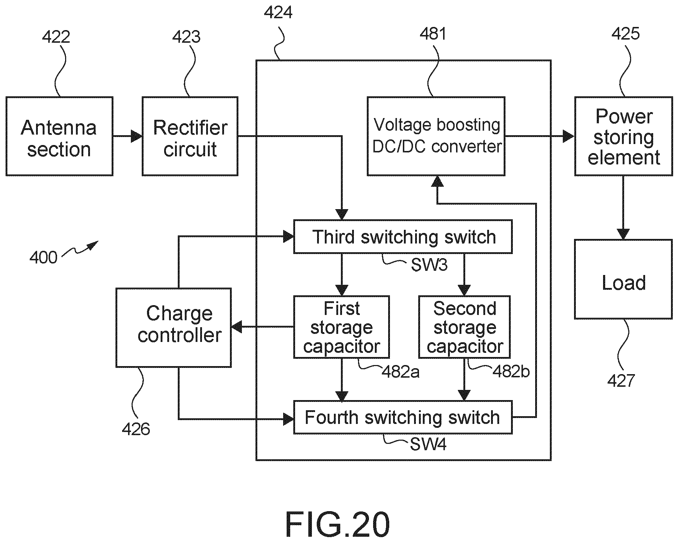

Fig. 20 is a block diagram illustrating an example of a configuration of a charging apparatus according to a fourth embodiment. As illustrated in Fig. 20, a charging apparatus 400 includes an antenna section 422, a rectifier circuit 423, a power storage 424, a power storing element 425, a charge controller 426, and a load 427.

The charging apparatus 400 has a configuration that is different from the configuration described in the embodiments above in primarily including the power storage 424 having a different configuration. Further, the antenna section 422, the rectifier circuit 423, the power storing element 425, and the load 427 respectively have configurations respectively similar to the configurations of the antenna section 22, the rectifier circuit 23, the power storing element 25, and the load 27 of the charging apparatus 100 described with reference to Figs. 9 and 10.

A third switching switch SW3, a fourth switching switch SW4, a voltage boosting DC/DC converter 481, a first storage capacitor 482a, and a second storage capacitor 482b are provided to the power storage 424.

The third switching switch SW3 performs switching on the first and second storage capacitors 482a and 482b to connect one of the first and second storage capacitors 482a and 482b to the rectifier circuit 423. Further, the fourth switching switch SW4 performs switching on the first and second storage capacitors 482a and 482b to connect one of the first and second storage capacitors 482a and 482b to the voltage boosting DC/DC converter 481.

The voltage boosting DC/DC converter 481 boosts a voltage corresponding to power stored in one of the first and second storage capacitors 482a and 482b, and the power storing element 425 is charged.

The charge controller 426 operates the third and fourth switching switches SW3 and SW4 according to a voltage level of the first storage capacitor 482a.

Fig. 21 is a circuit diagram illustrating an example of the configuration of the charging apparatus 400 according to the fourth embodiment. Fig. 21 illustrates a specific circuit configuration of the power storage 424 that is included in the configuration of the charging apparatus 400. Note that an illustration of the load 427 is omitted in Fig. 21.

Further, in the present embodiment, the detection terminal 10 used to detect voltage and the power supply terminal 12 connected to a power supply for operation are provided to the charge controller 426 as separate terminals.

The charging apparatus 400 has a configuration obtained on the assumption that a voltage level of power captured by the antenna section 422 is relatively low, as in the case of the charging apparatus 300 described with reference to Figs. 18 and 19.

As illustrated in Fig. 21, the power storage 424 includes a first backflow prevention diode 480a, a second backflow prevention diode 480b, the third switching switch SW3, the fourth switching switch SW4, the voltage boosting DC/DC converter 481, the first storage capacitor 482a, the second storage capacitor 482b, a first adjustment capacitor 483a, and a second adjustment capacitor 483b.

The third switching switch SW3 includes an input terminal 8a, a first output terminal 8b, a second output terminal 8c, and a control terminal 8d. Further, the fourth switching switch SW4 includes a first input terminal 9a, a second input terminal 9b, an output terminal 9c, and a control terminal 9d.

Further, the voltage boosting DC/DC converter 481 includes the input terminal 7a, the output terminal 7b, and the GND terminal 7d.

In the present embodiment, the power storage 424 charges output from the rectifier circuit 423 alternately to the first storage capacitor 482a and the second storage capacitor 482b to generate charge-use power used to charge the power storing element 425. In other words, in the present embodiment, the power stored in the first storage capacitor 482a and the power stored in the second storage capacitor 482b are used as the charge-use power.

As illustrated in Fig. 21, an anode of the first backflow prevention diode 480a is connected to the output terminal 71a of the rectifier circuit 423, and a cathode of the first backflow prevention diode 480a is connected to the input terminal 8a of the third switching switch SW3. The first output terminal 8b of the third switching switch SW3 is connected to the second input terminal 9b of the fourth switching switch SW4. The second output terminal 8c of the third switching switch SW3 is connected to the first input terminal 9a of the fourth switching switch SW4. The output terminal 9c of the fourth switching switch SW4 is connected to an anode of the second backflow prevention diode 480b. A cathode of the second backflow prevention diode 480b is connected to the input terminal 7a of the voltage boosting DC/DC converter 481. The output terminal 7b of the voltage boosting DC/DC converter 481 is connected to the positive electrode 28a of the power storing element 425, and the GND terminal 7d of the voltage boosting DC/DC converter 481 is connected to the negative charging line 35b (the GND line). Further, the negative electrode 28b of the power storing element 425 is connected to the output terminal 71b of the rectifier circuit 423.

The first storage capacitor 482a is connected between the first output terminal 8b of the third switching switch SW3 and the negative charging line 35b. The second storage capacitor 482b is connected between the second output terminal 8c of the third switching switch SW3 and the negative charging line 35b.

The first adjustment capacitor 483a is connected between the control terminal 8d of the third switching switch SW3 and the negative charging line 35b. The second adjustment capacitor 483b is connected between the control terminal 9d of the fourth switching switch SW4 and the negative charging line 35b.

The detection terminal 10 of the charge controller 426 is connected to the first output terminal 8b of the third switching switch SW3 (the second input terminal 9b of the fourth switching switch SW4), the power supply terminal 12 is connected between the output terminal 71a of the rectifier circuit 423 and the anode of the first backflow prevention diode 480a, the GND terminal 13 is connected to the negative charging line 35b, and the output terminal 11 is connected to the control terminal 8d of the third switching switch SW3 and to the control terminal 9d of the fourth switching switch SW4.

The first and second backflow prevention diodes 480a and 480b are diodes that are provided between the rectifier circuit 423 and the power storing element 425 and prevent backflow of current coming from the power storing element 425. The first and second backflow prevention diodes 480a and 480b each have a configuration similar to the configuration of the backflow prevention diode 80 described with reference to Fig. 10.

Note that the second backflow prevention diode 480b does not necessarily have to be provided as long as the voltage boosting DC/DC converter 481 includes a backflow prevention function.

The third switching switch SW3 is a switch element that performs switching on the first and second output terminals 8b and 8c to connect the input terminal 8a to one of the first and second output terminals 8b and 8c. As described above, the rectifier circuit 423 (the output terminal 71a) is connected to the input terminal 8a through the first backflow prevention diode 480a. Thus, the third switching switch SW3 performs switching on the first and second storage capacitors 482a and 482b to connect one of the first and second storage capacitors 482a and 482b to the rectifier circuit 423.

The fourth switching switch SW4 is a switch element that performs switching on the first and second input terminals 9a and 9b to connect one of the first and second input terminals 9a and 9b to the output terminal 9c. As described above, the power storing element 425 is connected to the output terminal 9c through the second backflow prevention diode 480b and the voltage boosting DC/DC converter 481 (the input terminal 7a). Thus, the fourth switching switch SW4 performs switching on the first and second storage capacitors 482a and 482b to connect one of the first and second storage capacitors 482a and 482b to the power storing element 425.

In the present embodiment, the third and fourth switching switches SW3 and SW4 are controlled by a shared control signal output by the charge controller 426. This will be described in detail later.

The voltage boosting DC/DC converter 481 is an element that boosts a voltage input to the input terminal 7a, and outputs the boosted voltage through the output terminal 7b. As described above, switching is performed on the first and second storage capacitors 482a and 482b, and one of the first and second storage capacitors 482a and 482b is connected to the input terminal 7a of the voltage boosting DC/DC converter 481. Thus, the voltage boosting DC/DC converter 481 boosts a voltage of one of the first and second storage capacitors 482a and 482b. Further, the boosted voltage is applied to the power storing element 425.

The first and second storage capacitors 482a and 482b each store therein output from the rectifier circuit 423. As described above, switching is performed on the first and second storage capacitors 482a and 482b, and one of the first and second storage capacitors 482a and 482b is connected to the output terminal 71a of the rectifier circuit 423. Thus, output from the rectifier circuit 423 is charged alternately to the first and second storage capacitors 482a and 482b.

The first adjustment capacitor 483a is charged by a control signal input to the third switching switch SW3. The second adjustment capacitor 483b is charged by a control signal input to the fourth switching switch SW4.

The first and second adjustment capacitors 483a and 483b respectively adjust a timing at which the third switching switch SW3 performs switching and a timing at which the fourth switching switch SW4 performs switching.

The charge controller 426 detects a voltage level of charge-use power, and outputs a control signal depending on a result of the detection to the third and fourth switching switches SW3 and SW4.

In the present embodiment, the charge controller 426 detects a voltage of the first storage capacitor 482a as the voltage level of charge-use power, and causes the third and fourth switching switches SW3 and SW4 to perform switching according to a result of the detection.

A threshold voltage V4 used to determine the voltage of the first storage capacitor 482a is set for the charge controller 426. The threshold voltage V4 is a threshold used to define a voltage input to the voltage boosting DC/DC converter 481, and, for example, the threshold voltage V4 is set similarly to the threshold voltage V3 described with reference to Fig. 19.

Here, it is assumed that the output voltage of the voltage boosting DC/DC converter 481 is 2.7 V and the minimum boost voltage for the voltage boosting DC/DC converter 481 is 0.5 V. Further, the threshold voltage V4 is set to 1 V.

[Operation of Charging Apparatus 400]

An operation of the charging apparatus 400 according to the present embodiment is described with reference to Fig. 21.

In the present embodiment, output from the rectifier circuit 423 is stored in the second storage capacitor 482b while the power storing element 425 is being charged by the first storage capacitor 482a being connected to the voltage boosting DC/DC converter 481. Further, output from the rectifier circuit 423 is stored in the first storage capacitor 482a while the power storing element 425 is being charged by the second storage capacitor 482b being connected to the voltage boosting DC/DC converter 481. The third and fourth switching switches SW3 and SW4 are controlled such that the operation described above can be performed.

In other words, the third and fourth switching switches SW3 and SW4 are controlled such that the second storage capacitor 482b is charged while the first storage capacitor 482a is supplying power to the power storing element 425 and such that the first storage capacitor 482a is charged while the second storage capacitor 482b is supplying power to the power storing element 425.

Specifically, the third and fourth switching switches SW3 and SW4 are controlled such that, when a voltage of the first storage capacitor 482a exceeds the threshold voltage V4 (V4≤Vs), the power storing element 425 and the first storage capacitor 482a are connected to each other through the voltage boosting DC/DC converter 481 and the rectifier circuit 423 and the second storage capacitor 482b are connected to each other.

Further, the third and fourth switching switches SW3 and SW4 are controlled such that, when the voltage of the first storage capacitor 482a is less than the threshold voltage V4 (V4>Vs), the power storing element 425 and the second storage capacitor 482b are connected to each other through the voltage boosting DC/DC converter 481 and the rectifier circuit 423 and the first storage capacitor 482a are connected to each other.

Further, in the present embodiment, the third switching switch SW3 performs switching earlier than the fourth switching switch SW4. For example, when the first storage capacitor 482a is charged and a voltage of the first storage capacitor 482a exceeds 1 V, the third switching switch SW3 performs switching first. Here, the rectifier circuit 423 connected to the first storage capacitor 482a is changed to be connected to the second storage capacitor 482b.

Next, the fourth switching switch SW4 performs switching a little late. Here, the voltage boosting DC/DC converter 481 connected to the second storage capacitor 482b is changed to be connected to the sufficiently charged first storage capacitor 482a.

The timings of the respective operations of the third and fourth switching switches SW3 and SW4 can be controlled by setting capacitance of the first adjustment capacitor 483a and capacitance of the second adjustment capacitor 483b. In other words, the capacitance of the first adjustment capacitor 483a and the capacitance of the second adjustment capacitor 483b are set such that the third switching switch SW3 performs switching earlier than the fourth switching switch SW4. Specifically, the capacitance of the first adjustment capacitor 483a is set smaller than the capacitance of the second adjustment capacitor 483b. Accordingly, the third switching switch SW3 performs switching faster than the fourth switching switch SW4.

Accordingly, for example, a capacitor that stores therein electric charges to be used to charge the power storing element 425, can be connected to the voltage boosting DC/DC converter 481 after electric charges are stored in the capacitor. This makes it possible to use, without waste, electric charges to charge the power storing element 425, and thus to improve the efficiency in storing power.

Further, here, when a time constant used to define the operation timings is set, the operation order of the third and fourth switching switches SW3 and SW4 is set only using the capacitance of the first adjustment capacitor 483a and the capacitance of the second adjustment capacitor 483b. In addition, resistances may be connected in series in a line through which a control signal is transmitted to form an RC circuit. In this case, the operation timings can be set according to, for example, a time constant of the RC circuit.

Note that, for example, the charge controller 426 for which two threshold voltages can be set may be used. In this case, for example, control to discharge power from the first storage capacitor 482a when the detected voltage Vs increases up to 1.0 V or more, and to charge power to the first storage capacitor 482a when the detected voltage Vs decreases up to 0.5 V or less, may be performed.

As described above, the present embodiment adopts a configuration in which control to charge one of the two storage capacitors 482a and 482b and to connect another of the two storage capacitors 482a and 482b to the voltage boosting DC/DC converter 481 is performed repeatedly to charge the power storing element 425.

For example, in the configuration described with reference to Fig. 19, the voltage boosting DC/DC converter 381 does not operate during a period of time from the storage capacitor 382 running out of electric charges to the storage capacitor 382 having been recharged. On the other hand, in the present embodiment, one of capacitors is being charged while another of the capacitors is in operation. This makes it possible to keep storing power output by the antenna section 422 while the power storing element 425 is being charged, and thus to sufficiently store power efficiently.

<Fifth Embodiment>

[Harvester Apparatus That Adopts Measures Against Short Circuit]

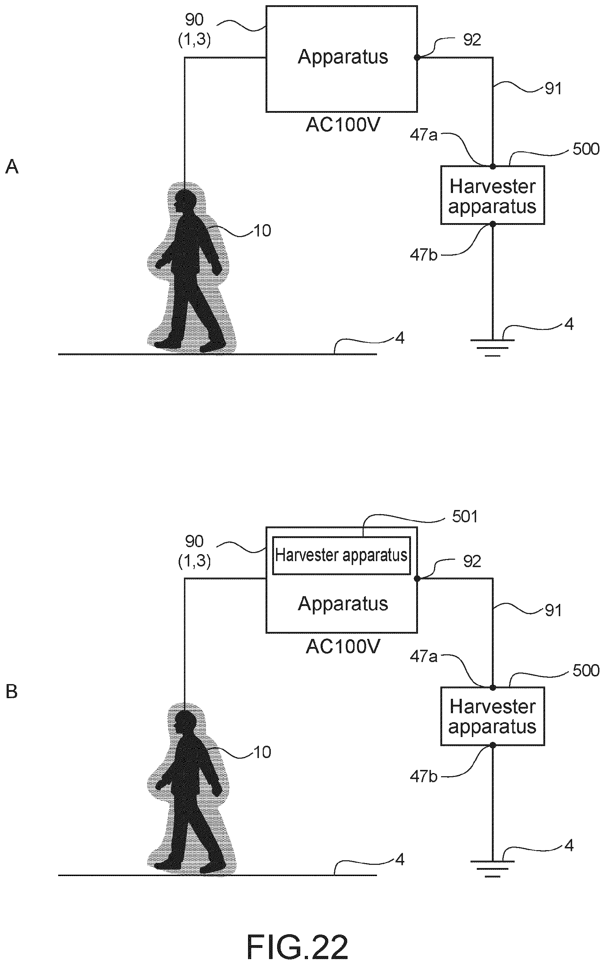

Fig. 22 schematically illustrates an example of connection of a harvester apparatus 500 according to a fifth embodiment. The harvester apparatus 500 is an apparatus (an electric field harvester) that performs energy harvesting that is harvesting, as power, energy of an electric field present in a surrounding environment. Typically, the harvester apparatus 500 is a charging apparatus that charges harvested power to a battery. In this case, the respective structural elements of the charging apparatus described above are used as appropriate. Note that the harvester apparatus 500 may be an apparatus that supplies power to a load without charging power.

In the present embodiment, the harvester apparatus 500 is connected to an apparatus 90 that is grounded to the earth ground 4 (hereinafter simply referred to as a GND 4). In this case, the apparatus 90 grounded to the GND 4 corresponds to the target 1 (the metallic body 3). The case in which the harvester apparatus 500 is connected to the apparatus 90 having to be grounded to the GND 4 in accordance with safety standards is primarily described below. Note that the following description is not limited to the apparatus 90 having to be placed on the GND 4, and can be applied to any apparatus 90 used by being grounded to the GND 4.

In general, the apparatus 90, which may cause an electric shock to a human body 10 or may cause a fire, has to be grounded. For example, a grounding cable 91 (a ground wire) is attached to such an apparatus 90, and such an apparatus 90 has to be grounded to the GND 4.

For example, the apparatus 90 illustrated in A of Fig. 22 is connected to a power supply of 100 V AC, and is a voltage source of a maximum of 100 V for the human body 10.

Here, grounding resistance with respect to the human body 10 connected between the apparatus 90 and the GND 4 is calculated. For example, when current flows through the human body 10, a value of a sum of resistance caused in a skin portion from which current flows; resistance caused in, for example, blood, internal organs, and muscles in the inside of the body; and resistance caused in a portion (such as resistance under feet) of which current flows out, is calculated as resistance of the human body 10. For example, when skin has dried sufficiently, the human body 10 exhibits a resistance of about 5 kQ. Further, it is assumed that electrostatic shoes that are difficult to conduct electricity are worn on the human body 10. A value of resistance of the electrostatic shoes is, for example, greater than or equal to 100 kQ. Here, it is assumed that electrostatic shoes that exhibit a value of resistance of 100 kQ are used. In this case, the grounding resistance with respect to the human body 10 is calculated as indicated below: $5k\Omega+100k\Omega=105k\Omega$.

Thus, current that flows through the human body 10 when, for example, the apparatus 90 illustrated in A of Fig. 22 is above the GND 4 and a voltage of 100 V is applied to the human body 10 being in contact with the apparatus 90, is calculated as indicated below: $100V/105k\Omega\approx0.95mA$.

For example, a user only feels an instantaneous electric stimulus due to a current of about 1 mA. However, for example, the user feels pain due to a current of 5 mA, and the user goes into convulsions or has difficulty in breathing due to a current of 20 mA. A value of current larger than 20 mA may result in life-threatening state.

For this reason, in order for the harvester apparatus 500 to operate in a state of being connected between the apparatus 90 and the GND 4 (in the middle of the grounding cable 91), there is a need for sufficient measures against short circuit.

For example, the measures against short circuit are measures taken to prevent current from being leaked from the apparatus 90 to the GND 4 through the human body 10. A method for performing what is called grounding is used as measures against short circuit for the harvester apparatus 500, the grounding being connecting the apparatus 90 and the GND 4 with a value of resistance lower than an electric resistance of the human body 10 in a state in which the harvester apparatus 500 and the apparatus 90 are connected to each other.

Here, referring to the safety standards currently applied in Japan, examples of the apparatus 90 to which the harvester apparatus 500 is applied include the apparatus 90 for which Class D grounding (hereinafter referred to as D grounding) is necessary. The D grounding is grounding performed on machinery and appliances of a low voltage that is lower than or equal to 300 V, metallic casings, and metallic tubes. For example, the D grounding is performed on an apparatus, from among the apparatuses 90 used by being connected to a power supply of an alternating current of 100 V, that is to be installed. For example, grounding of the apparatuses 90 such as microwaves, refrigerators, washing machines, driers, air conditioners, dehumidifiers, various measurement devices, factory robots, and server apparatuses is compliant with the standards. As described above, a general apparatus 90 is used on the basis of the D grounding. In the following description, it is assumed that the D grounding is performed on the apparatus 90 to which the harvester apparatus 500 is applied.

The grounding resistance in which direct-current resistance is less than or equal to 100 $\Omega$ is desired when the D grounding is performed. Note that the grounding resistance in which the direct-current resistance is less than or equal to 500 Ω may be used in the case in which an apparatus is provided that automatically breaks a low tension circuit within 0.5 seconds when a ground fault (a short circuit) occurs in the circuit. For example, a change in grounding resistance from 100 Ω to 500 Ω is approved in the D grounding when there is a mechanism that stops, upon detecting dark current, power supplied to the apparatus 90.

The harvester apparatus 500 is configured such that the D grounding described above can be performed.

Here, an example of connection between the harvester apparatus 500 and the apparatus 90 is described with reference to Fig. 22. A of Fig. 22 schematically illustrates the harvester apparatus 500 connected to the apparatus 90 provided with the grounding cable 91.

The apparatus 90 is provided with a grounding terminal 92 to which the grounding cable 91 is connected.

The harvester apparatus 500 includes the connection point 47a and the connection point 47b. The connection point 47a is a node that is used to connect the first antenna conductor 31 to a rectifier circuit (not illustrated). Further, the connection point 47b is a node that is used to connect the second antenna conductor 32 to the rectifier circuit (not illustrated). The connection point 47a and the connection point 47b are hereinafter respectively referred to as a first connection point 47a and a second connection point 47b.

As illustrated in A of Fig. 22, the first connection point 47a of the harvester apparatus 500 is connected to the grounding terminal 92 of the apparatus 90. In this case, a ground (such as a ground pattern or a housing connected to the ground) provided to the apparatus 90 serves as the first antenna conductor 31. The second connection point 47b is connected to the GND 4. In this case, wiring connected to the GND 4 serves as the second antenna conductor 32.

The measures against short circuit for the harvester apparatus 500 is, for example, performing the D grounding on the apparatus 90 and the GND 4. This corresponds to performing the D grounding between the first connection point 47a and the second connection point 47b.

Further, in B of Fig. 22, another harvester apparatus 501 is provided in the apparatus 90 in a state of being connected to the harvester apparatus 500. For example, when the apparatus 90 is above the GND 4, a ground or the like of the apparatus 90 serves as the first antenna conductor 31 successfully.

Furthermore, resistance (impedance) to an alternating-current signal transmitted through a current path used for grounding can also be set high for the apparatus 90 grounded such that the conditions for the D grounding are satisfied. In this case, the ground or the like of the apparatus 90 serves as the first antenna conductor 31 successfully for an alternating-current signal in a frequency band with a high impedance.

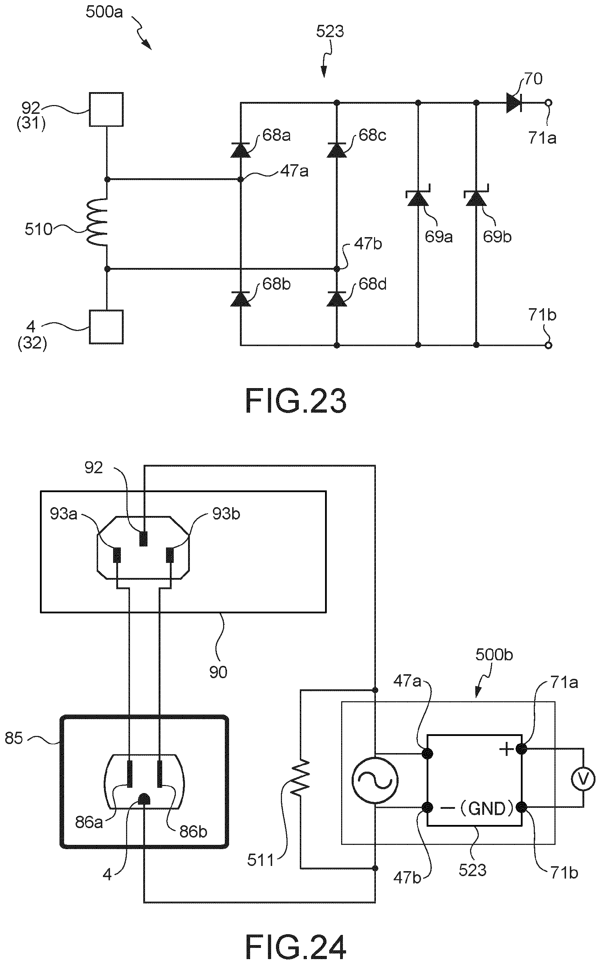

As described above, when the ground or the like of the apparatus 90 is considered to be above the GND 4 sufficiently, the provision of the other harvester apparatus 501 in the apparatus 90 makes it possible to efficiently capture electric field energy. The configuration in which the impedance of a current path used for grounding is increased is specifically described with reference to, for example, Fig. 23.

Note that measures against static electricity are also taken in the harvester apparatus 500. For example, voltage applied between the first connection point 47a and the second connection point 47b may be sufficiently high in the harvester apparatus 500, but flowing current is small. Thus, for example, resistance of about 100 kΩ or an electrostatic protection component such as a varistor is provided between the first connection point 47a and the second connection point 47b to overcome the issue described above (refer to, for example, Figs. 4 and 5).

On the other hand, in order to prevent a short circuit that may result in an electric shock to the human body 10 or in fire, there is a need for measures that make it possible to restrict current. A specific description is made below.

[Example of Configuration of Harvester Apparatus 500]

Fig. 23 is a circuit diagram illustrating an example of a configuration of a harvester apparatus that adopts measures against short circuit. As illustrated in Fig. 23, a harvester apparatus 500a includes a rectifier circuit 523 and an inductor 510, where the inductor 510 is added to a portion in which the ground of the apparatus 90 and the GND 4 are connected.

For example, the rectifier circuit 523 has a configuration similar to the configuration of the rectifier circuit 23 described with reference to Fig. 6. In the following description, structural elements included in the rectifier circuit 523 are denoted by reference numerals similar to the reference numerals of the structural elements of the rectifier circuit 23.

The inductor 510 is connected between the first and second connection points 47a and 47b corresponding to inputs of the rectifier circuit 523. For example, a choke coil that suppresses a highfrequency component is used as the inductor 510. Moreover, any element, such as a winding coil, a transformer coil, or stacked coils, that has inductance may be used. The harvester apparatus 500a has a configuration in which the inductor 510 short-circuits an input side (the first connection point 47a and the second connection point 47b) of the rectifier circuit 23 described with reference to Fig. 6. A method for setting direct-current resistance Rdc and inductance L of the inductor 510 is described below.

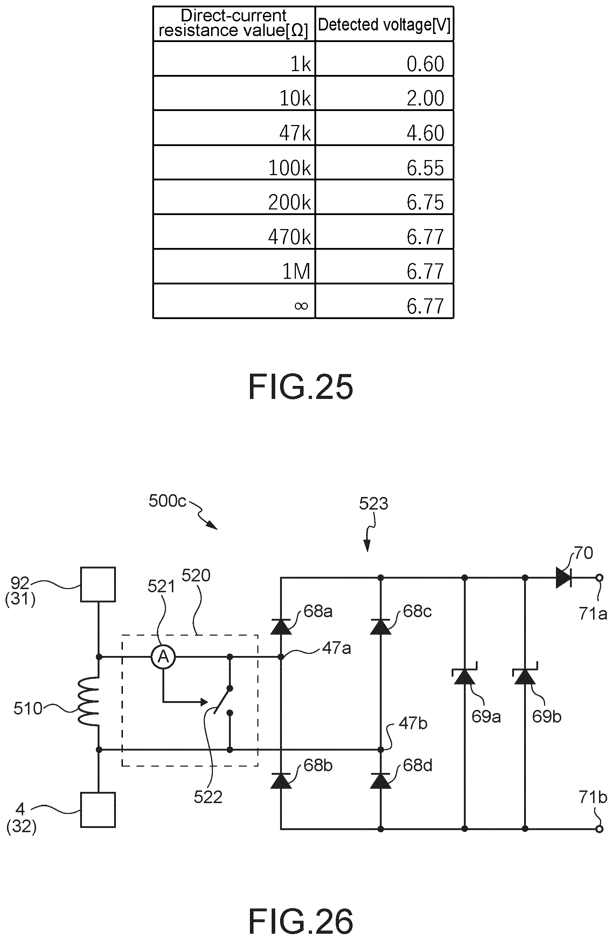

Fig. 24 schematically illustrates a measurement circuit used to measure a relationship between output from a harvester apparatus and grounding resistance. Fig. 25 is a table in which an example of the measurement of the relationship between the output from the harvester apparatus and the grounding resistance is given. In the measurement circuit illustrated in Fig. 24, a harvester apparatus 500b used for a test is connected between the grounding terminal 92 of the apparatus 90 (here, a measurement apparatus that is driven with 100 V AC) for which the D grounding is necessary, and the GND 4 provided to a socket of an AC power supply 85. The harvester apparatus 500b is an apparatus to which a resistive element 511 that corresponds to a direct-current resistive component is connected, instead of the inductor 510 of the harvester apparatus 500a.

As illustrated in Fig. 24, the first connection point 47a of the harvester apparatus 500b is connected to the grounding terminal 92 of the apparatus 90, and the second connection point 47b of the harvester apparatus 500b is connected to the GND 4. Note that output terminals 86a and 86b of the AC power supply 85 are respectively connected to two power supply terminals 93a and 93b that are provided to the apparatus 90, and 100V AC is supplied to the power supply terminals 93a and 93b.

Further, the resistive element 511 is connected between the first connection point 47a and the second connection point 47b. The resistive element 511 is an element such as a winding resistance for which a specified direct-current resistance value is set. The resistive element 511 serves as grounding resistance that connects the apparatus 90 and the GND 4. For example, when the resistive element 511 is sufficiently large, the apparatus 90 is substantially above the GND 4.

In the measurement circuit illustrated in Fig. 24, an output voltage (a voltage between the output terminals 71a and 71b) of the harvester apparatus 500b is measured for different direct-current resistance values of the resistive element 511. Note that, in the harvester apparatus 500b, elements respectively brought into conduction with 6.5 V are respectively used as Zener diodes 69a and 69b provided on the output side of the rectifier circuit 523. Thus, the voltage between the output terminals 71a and 71b is about 6.5 V at a maximum.

Fig. 25 illustrates a value of direct-current resistance [Ω] of the resistive element 511 corresponding to grounding resistance, and the detected voltage [V] between the output terminals 71a and 71b, which is detected by the harvester apparatus 500b when each resistance value is set. For example, when the value of direct-current resistance was 1 kQ, which is relatively low, the detected voltage was 0.60 V. Further, a voltage of 2.00 V was detected when the value of direct-current resistance was 10 kQ, and a voltage of 4.60 V was detected when the value of direct-current resistance was 47 kQ.

As described above, the ground of the apparatus 90, which corresponds to the first antenna conductor 31, gets closer to a state of being above the GND 4 as a value of direct-current resistance becomes larger, and thus the detected voltage is increased.

The value of direct-current resistance is further increased, and when the value of direct-current resistance reaches, for example, 100 kQ, the detected voltage is 6.55 V. This is substantially similar to a value (6.77 V) obtained when the resistive element 511 is removed and the ground of the apparatus 90 is completely above the GND 4 (the direct-current resistance value = ∞). In other words, when an element exhibiting a direct-current resistance of about 100 kQ is inserted between the first connection point 47a and the second connection point 47b, this results in the first connection point 47a being substantially above the second connection point 47b, and thus in inducing voltage properly.

Note that, under the condition that a value of resistance is greater than or equal to 10 kQ, a voltage that is higher than or equal to 2 V can also be induced in a range in which the value of direct-current resistance is less than or equal to 100 kQ. This makes it possible to sufficiently operate, for example, the charging apparatuses described in the embodiments above.

A direct-current resistance component of the grounding resistance has been described with reference to Figs. 24 and 25. On the other hand, electric field energy captured by the harvester apparatus 500a is primarily energy of an alternating-current signal. Thus, when, for example, resistance (impedance) to an alternating-current signal of a target frequency is sufficiently high, this makes it possible to cause the ground of the apparatus 90 to get closer to a state of being above the GND 4, and thus to induce a high voltage.

It is considered that, when, for example, connection with an alternating-current power supply of 50 Hz (or 60 Hz) is established, a 50-Hz (or 60-Hz) alternating-current signal is a primary source of supplying electric field energy. Thus, when, for example, impedance at 50 Hz (or 60 Hz) is greater than or equal to 100 kQ, the ground of the apparatus 90 is substantially above the GND 4, as described above. This makes it possible to capture energy efficiently.

Here, a relationship between impedance Z and inductance L in the inductor 510 is described. On the assumption that a component of the impedance Z due to capacitance of the inductor 510 is sufficiently small, the impedance Z due to the inductance L is primarily described below.

The impedance Z of the inductor 510 can be represented as indicated below: Z=jwL (here, j represents an imaginary). Thus, a magnitude of the impedance Z is represented using a formula indicated below.

$$|Z| = \omega L = 2\pi f L \quad (1)$$

Here, f represents a frequency.

As indicated in Formula (1), the magnitude of the impedance Z is proportional to the frequency f and the inductance L. For example, Z=314Q at a frequency of 50 Hz when L=1[H].

Here, it is assumed that the direct-current resistance Rdc of the inductor 510 is set to 500 Ω or less such that criteria for the D grounding described above are satisfied. In other words, the direct-current resistance Rdc of the inductor 51 is set to a value that is less than or equal to an upper limit (500 Ω) that is set to prevent the occurrence of a short circuit.

For example, a choke coil that exhibits an inductance of 10 [H] and a direct-current resistance of 53 Ω can be used. When such elements are connected in series to form the inductor 510, the nine elements can be used in a range in which Rdc≤500Ω. In this case, Rdc=9×53=477Ω and L=9×10=90[H] for the inductor 510. Thus, the impedance Z of the inductor 510 at 50 Hz is obtained as indicated below using Formula (1): Z=28.3kQ.

From the values given in the table illustrated in Fig. 25, the voltage to be obtained with 28.3 kQ is estimated to be about 3.5 V. As described above, a sufficiently high voltage can also be induced when the inductor 510 is configured such that the direct-current resistance Rdc satisfies the conditions for the D grounding.

Note that Z=376.8Ω at a frequency of 60 Hz when L=1[H]. Here, an element exhibiting an inductance of 10 [H] and a direct-current resistance of 53 Ω is used. As a result of calculation similar to the calculation described above, the inductor 510 is formed by the nine elements being connected in series, where 34 kQ is obtained as the impedance Z of the inductor 510 at 60 Hz. This makes it possible to induce a voltage close to 4 V.

The inductor 510 of the harvester apparatus 500a illustrated in Fig. 23 is formed as described above. This makes it possible to ground the ground of the apparatus 90 to the GND 4 such that the conditions for the D grounding are satisfied in order to take measures against short circuit, while maintaining the efficiency in the harvester apparatus 500a capturing energy. It can also be said that the harvester apparatus 500a includes the inductor 510 in order to separate a value of resistance (the impedance Z) at a frequency in a bandwidth of 50 Hz / 60 Hz and a value of resistance of a direct-current component, as described above.

Further, it is favorable that, in the harvester apparatus 500a, the direct-current resistance Rdc of the inductor 510 be reduced and the inductance L of the inductor 510 be increased. This makes it possible to increase the impedance Z at 50 Hz, and thus to improve a performance of the harvester apparatus 500a. For example, Rdc and L of the inductor 510 are set such that Z≥100kΩ with respect to the impedance Z. This makes it possible to take measures against short circuit with certainty, and to collect energy very efficiently.

Fig. 26 is a circuit diagram illustrating another example of the configuration of the harvester apparatus adopting measures against short circuit. As illustrated in Fig. 26, a harvester apparatus 500c includes the rectifier circuit 523, the inductor 510, and a relay switch 520. The harvester apparatus 500c is obtained by adding the relay switch 520 to the harvester apparatus 500a illustrated in Fig. 23.

The relay switch 520 includes a switch controlling element 521 and a switch 522. The relay switch 520 is an element in which the switch 522 is turned on when an operation current greater than or equal to a threshold current Ith flows through the switch controlling element 521. Note that, when the operation current flowing through the switch controlling element 521 is less than the threshold current Ith, the switch 522 is kept off.

For example, an electromagnetic relay is used as the relay switch 520. In this case, the switch controlling element 521 is formed using a coil. Switching to turn on or off the switch 522 is performed by the switch 522 being moved physically by electromagnetic induction. Further, for example, a solid relay that includes the switch controlling element 521 formed using a semiconductor element such as a photocoupler may be used.

As illustrated in Fig. 26, the switch controlling element 521 is provided to a current path that connects the first antenna conductor 31 and the first connection point 47a, and operates according to current flowing into the first connection point 47a from the first antenna conductor 31. The switch 522 is connected between the first connection point 47a and the second connection point 47b. Thus, the relay switch 520 has a structure in which, when the current flowing into the rectifier circuit 523 exceeds the specified threshold current Ith, the first connection point 47a and the second connection point 47b are short-circuited and the current flows into the GND 4.

For example, an element for which the threshold current Ith is less than or equal to 1 mA (for example, Ith = 0.6 mA) can be used as the relay switch 520. Note that current captured by the harvester apparatus 500c is, for example, from several microamperes to tens of microamperes. Thus, current captured in a normal operation does not exceed the threshold current Ith.

Further, resistance of the switch 522 in a state of being on is set to about several ohms. Thus, for example, when the switch 522 is on, the first connection point 47a is grounded to the GND 4 with certainty through the second connection point 47b. In this state, a value of resistance in a current path between the apparatus 90 and the GND 4 is sufficiently smaller than a value of resistance of the human body 10. Thus, the safety is secured since current does not flow into the human body 10. Further, a structure in which the static electricity escapes into the earth through an electrostatic protection component of the harvester apparatus 500c, is adopted.

Further, the harvester apparatus 500c includes the inductor 510 described above. Consequently, the D grounding is also performed on the apparatus 90 to ground the apparatus 90 to the GND 4 in a normal operation. As described above, in the harvester apparatus 500c, the inductor 510 and relay switch 520 corresponding to the two measures against short circuit are used together. Consequently, the safety of the harvester apparatus 500c can be sufficiently improved, and thus an apparatus for which the D grounding is necessary can also be used safely by the harvester apparatus 500c being attached to the apparatus.

In Fig. 26, the inductor 510 and the relay switch 520 are provided to the harvester apparatus 500c. Without being limited thereto, for example, a harvester apparatus that only includes the relay switch 520 may be provided. In other words, a configuration in which the inductor 510 has been removed from the harvester apparatus 500c may be used.

When, for example, there are no restrictions on grounding resistance, only the relay switch 520 is included, and this enables the apparatus 90 to be above the GND 4 in a normal operation. In this case, current is no longer leaked into the GND 4, and this enables an electric field harvester to provide a performance sufficiently. Of course, the provision of the relay switch 520 makes it possible to take measures against short circuit.

<Sixth Embodiment>

[Harvester Apparatus Connected to GND Terminal]

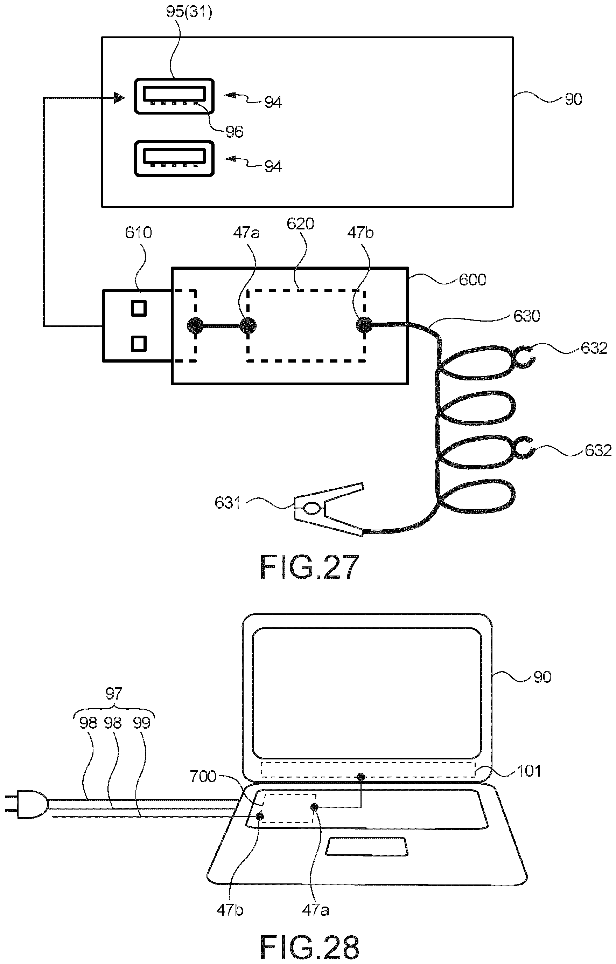

Fig. 27 schematically illustrates an example of a configuration of a harvester apparatus according to a sixth embodiment. A harvester apparatus 600 is an electric field harvester that is used by being connected to various connectors 94 provided to the apparatus 90. Typically, the harvester apparatus 600 is a charging apparatus. Without being limited thereto, for example, the harvester apparatus 600 may be an apparatus that drives a load directly with harvested energy.

In the present embodiment, the harvester apparatus 600 is connected to the apparatus 90, which can be used without being grounded to the GND 4 (the earth ground).

For example, a surface of the apparatus 90, such as a television, a game machine, a desktop, or a laptop, that is not provided with a grounding cable is covered with resin to prevent the occurrence of a short circuit. The apparatus 90 covered with resin as described above only includes a small metallic portion with which a harvester apparatus can be brought into contact.

On the other hand, the various connectors 94 are provided to the apparatus 90, and each connector 94 includes a GND terminal 95 in principle. Thus, the harvester apparatus 600 uses, as the first antenna conductor 31, the GND terminal 95 of the connector 94 provided to the apparatus 90. Direct connection with the apparatus 90 is established to use the GND of the apparatus 90 positively, as described above, and this makes it possible to greatly increase an amount of power received, compared to when connection with a portion covered with resin is established.

Fig. 27 schematically illustrates, in its upper portion, the apparatus 90 provided with a plurality of connectors 94. Each connector 94 includes the GND terminal 95 connected to the ground of the apparatus 90, and a signal terminal 96 used to transmit and receive an electric signal.

Two Universal-Serial-Bus (USB) type-A female connectors are provided to the apparatus 90 illustrated in Fig. 27 as the connectors 94. Moreover, a form, a type, and the like of the connector 94 provided to the apparatus 90 are not limited, and it is sufficient if at least one connector 94 used to communicate an electric signal is provided.

When, for example, the apparatus 90 is a video apparatus such as a television, various connectors such as an HDMI (registered trademark) input connector, a D connector, an AV input connector, an RGB input connector, a PC sound input connector, and a LAN connector are used in addition to the USB connector described above. For example, the signal terminal 96 is provided to such a connector 94 to be shielded by the GND terminal 95.

Normally, all of the connectors 94 are not used. Thus, the harvester apparatus 600 can be connected to an unused connector 94.

Fig. 27 schematically illustrates, in its lower portion, an example of a configuration of the harvester apparatus 600. The harvester apparatus 600 includes a connector connection section 610, a harvester body 620, and a GND connection cable 630. The connector connection section 610 is a terminal that is used to establish connection with the connector 94 of the apparatus. Here, a USB type-A male connector is used as the connector connection section 610 in order to establish connection with the connector 94 provided to the apparatus 90. Note that the connector connection section 610 may be set as appropriate according to the type of the connector 94 of the apparatus 90. Alternatively, the connector connection section 610 may be capable of being connected to different types of connectors by replacement being performed.

The harvester body 620 is a circuit that includes, for example, a rectifier circuit and a charging circuit (not illustrated). The harvester body 620 includes the first connection point 47a and the second connection point 47b, which correspond to input nodes of the rectifier circuit. The first connection point 47a is connected to the GND of the connector connection section 610. Thus, when the harvester apparatus 600 is connected to the connector 94 of the apparatus 90, the first connection point 47a is connected to the GND terminal 95 of the apparatus 90, and the ground of the apparatus 90 serves as the first antenna conductor 31.

On the other hand, the second connection point 47b is connected to the second antenna conductor 32 electrically independent of the first connection point 47a. Here, the second connection point 47b is connected to the GND connection cable 630. Thus, the GND connection cable 630 serves as the second antenna conductor 32.

As described above, the harvester apparatus 600 is connected to the GND terminal 95 of the apparatus 90 through a corresponding connector 94 to use the metallic portion of the apparatus 90 as an antenna. In other words, only a connection portion (the GND terminal 95) that is connected to the ground of the apparatus 90 is connected to the harvester apparatus 600, using a commonly used general-purpose connector 94. Such a configuration makes it possible to easily attach the harvester apparatus 600 to the apparatus 90, and thus to greatly increase an amount of power received without changing the apparatus 90 itself. Further, the use of a USB type-A connector adopted for various apparatuses 90 also makes it possible to use the harvester apparatus 600 with no change for the apparatus 90 such as a game machine or a PC.

Further, the second antenna conductor 32 may have a long or short antenna length. In other words, the second antenna conductor 32 may be a meander line antenna or plate antenna that is formed on a substrate, although the GND connection cable 630 is used in the present embodiment. It is favorable that the second antenna conductor 32 have a longer antenna length in order to harvest a greater amount of energy. Further, the second antenna conductor 32 can be grounded by increasing the antenna length. For these reasons, Fig. 27 illustrates a configuration that enables the second antenna conductor 32 (the second connection point 47b) to be grounded to the GND 4 using the GND connection cable 630.

A metal clip 631 used to connect the GND connection cable 630 to, for example, an external ground wire is provided to a tip of the GND connection cable 630. Note that, for example, a crimp terminal may be provided instead of the metal clip 631. Further, a cable clip 632 used to fix another cable to the GND connection cable 630 is provided to the GND connection cable 630. The use of the cable clip 632 makes it possible to route the GND connection cable 630 along, for example, a power supply cable of the apparatus 90. This makes it possible to make it look better by rearranging around the cables.

When, for example, the harvester apparatus 600 is attached to the apparatus 90 such as a television, an environment sensor or the like used to transmit information regarding a temperature, humidity, and whether the television is on or off can be formed, for example, using power received by the harvester apparatus 600. This makes it possible to obtain, for example, a temperature at an actual location of the television. This results in being able to, for example, control a room temperature and the like properly in cooperation with an air conditioner. Further, in, for example, a factory in which there are, for example, a lot of monitors and PCs, the harvester apparatus 600 can also be used as a sensor used to acquire data used to manage air conditioning.

<Seventh Embodiment>

[Harvester Apparatus Built in Apparatus]

Fig. 28 schematically illustrates an example of a configuration of an apparatus that includes a harvester apparatus according to a seventh embodiment. The configuration in which the first connection point 47a is connected to the metallic portion corresponding to the ground of the apparatus 90 using the GND terminal 95 of the connector 94 provided to the apparatus 90 to use the metallic portion as the first antenna conductor 31, has been described above with reference to Fig. 27. Here, a harvester apparatus 700 that is built in the apparatus 90 in advance is described.

Typically, the harvester apparatus 700 is a charging apparatus. Without being limited thereto, for example, the harvester apparatus 700 may be an apparatus that drives a load directly using harvested energy.

In the example illustrated in Fig. 28, the harvester apparatus 700 is incorporated into a laptop (the apparatus 90). The first connection point 47a and the second connection point 47b, which correspond to input nodes of a rectifier circuit (not illustrated), are provided to the harvester apparatus 700.

Further, a power supply cable 97 of the apparatus 90 includes a pair of power supply lines 98 and an antenna line 99, the pair of power supply lines 98 being used to supply power to the apparatus 90. The pair of power supply lines 98 is connected to the apparatus 90 and used to supply power used to drive a circuit in the apparatus 90. The antenna line 99 is accommodated in the power supply cable 97 with the pair of power supply lines 98 and is routed with the power supply lines 98.

The first connection point 47a of the harvester apparatus 700 is connected to a ground portion 101 that is the ground of the apparatus 90. The ground portion 101 is, for example, a ground pattern provided to the apparatus 90 or a metallic housing included in the apparatus 90. Thus, the ground portion 101 serves as the first antenna conductor 31. Further, the second connection point 47b of the harvester apparatus 700 is connected to the antenna line 99. Thus, the antenna line 99 serves as the second antenna conductor 32.

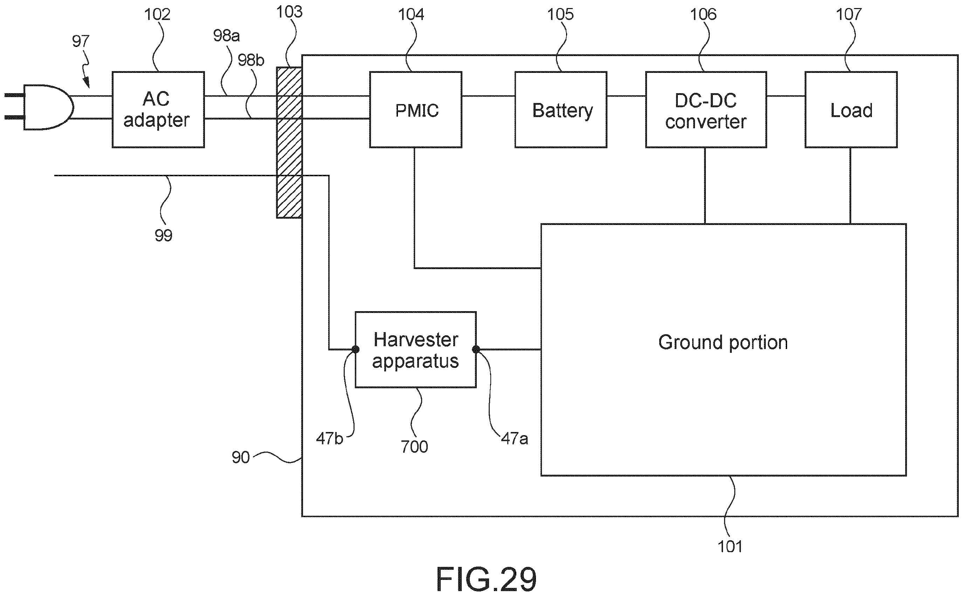

Fig. 29 is a block diagram illustrating an example of a functional configuration of the apparatus 90 including the harvester apparatus 700. Here, an AC adapter 102 is provided in the middle of the power supply cable 97, and a direct-current voltage is generated from an alternating-current power supply. In the following description, one of the pair of power supply lines 98 output from the AC adapter 102 that exhibits a higher voltage is referred to as a positive power supply line 98a, and another of the pair of power supply lines 98 that exhibits a lower voltage is referred to as a negative power supply line 98b.

Further, the apparatus 90 including the harvester apparatus 700 includes a connector 103, a power management IC (PMIC) 104, a battery 105, a DC-DC converter 106, and a load 107.

The connector 103 is a three-terminal connector to which the positive power supply line 98a, the negative power supply line 98b, and the antenna line 99 are connected. The PMIC 104 is, for example, an IC that controls power used in the apparatus 90, and is connected to the positive power supply line 98a and the negative power supply line 98b through the connector 103. For example, the PMIC 104 controls charging of the battery 105 that is performed with power supplied by the AC adapter 102. The battery 105 is a primary battery of the apparatus 90 corresponding to a laptop. The DC-DC converter 106 adjusts a voltage of the battery 105 and supplies the adjusted voltage to the load 107. Examples of the load 107 include a CPU, a display, a speaker, and various circuits modules (such as a sensor module and a communication module) that are included in the apparatus 90. Further, the PMIC 104, the DC-DC converter 106, and the load 107 are each connected to the ground portion 101, as illustrated in Fig. 29.

The first connection point 47a of the harvester apparatus 700 is connected to the ground portion 101, and the second connection point 47b of the harvester apparatus 700 is connected to the antenna line 99 through the connector 94.

As described above, the addition of the antenna line 99 to the power supply cable 97 enables the second antenna conductor 32 (the antenna line 99) to be along the power supply lines 98. This makes it possible to improve the efficiency in power reception performed by the harvester apparatus 700 built in the apparatus 90. Note that an end of the antenna line 99 that is situated opposite to the second connection point 47b may be open or may be capable of being connected to the GND 4.

According to this configuration, leakage power leaked during charging can be positively harvested at a timing of charging the battery 105 of the apparatus 90 such as a PC. Further, the use of the harvested power makes it possible to charge, for example, an internal clock. This results in there being no need for, for example, a button battery used to drive the internal clock, and thus in being able to help in reducing an environmental load.

At least two of the features of the present technology described above can also be combined. In other words, the various features described in the respective embodiments may be combined discretionarily regardless of the embodiments. Further, the various effects described above are not limitative but are merely illustrative, and other effects may be provided.

In the present disclosure, expressions such as "same", "equal", and "orthogonal" include, in concept, expressions such as "substantially the same", "substantially equal", and "substantially orthogonal". For example, the expressions such as "same", "equal", and "orthogonal" also include states within specified ranges (such as a range of +/-10%), with expressions such as "exactly the same", "exactly equal", and "completely orthogonal" being used as references.

Note that the present technology may also take the following configurations.

(1) A charging apparatus, including:

a dipole-structure antenna section that includes a first antenna conductor and a second antenna conductor that is a conductor different from the first antenna conductor, the first antenna conductor being electrically coupled to a target including a metallic body or a human body, the second antenna conductor not being connected to the target;
a rectifier circuit that rectifies output from the antenna section;
a power storage that generates power on the basis of output from the rectifier circuit and charges a power storing element with the power; and
a charge controller that controls an operation of the power storage according to a voltage level of the power.

(2) The charging apparatus according to (1), in which
the power storage includes a first switching switch that is arranged between the rectifier circuit and the power storing element, the first switching switch switching between an on state and an off state with respect to connection between the rectifier circuit and the power storing element.
(3) The charging apparatus according to (2), in which
the charge controller detects an output voltage of the rectifier circuit as the voltage level of the power, and performs switching to turn on or off the first switching switch according to a result of the detection.
(4) The charging apparatus according to (3), in which the charge controller turns off the first switching switch when the output voltage of the rectifier circuit exceeds a threshold voltage for the first switching switch.
(5) The charging apparatus according to any one of (2) to (4), in which
the first switching switch is a MOSFET or a load switch.
(6) The charging apparatus according to (1), in which
the power storage includes a second switching switch that controls supply of the power to the power storing element.

(7) The charging apparatus according to (6), in which

the power storage includes a storage capacitor that stores therein the output from the rectifier circuit, the storage capacitor being connected to the second switching switch, and

the charge controller detects a voltage of the storage capacitor as the voltage level of the power, and performs switching to turn on or off the second switching switch according to a result of the detection.

(8) The charging apparatus according to (7), in which
the charge controller turns on the second switching switch when the voltage of the storage capacitor exceeds a threshold voltage for the second switching switch.

(9) The charging apparatus according to any one of (6) to (8), in which

the charge controller outputs a control signal used to turn on the second switching switch, and
the power storage includes an adjustment capacitor that is charged by the control signal.

(10) The charging apparatus according to (9), in which

the second switching switch includes a control terminal to which the control signal is input, and

capacitance of the adjustment capacitor is set such that, until a voltage of the storage capacitor decreases up to a specified voltage, a voltage state at the control terminal is equivalent to the voltage state at the control terminal at the time of input of the control signal to the control terminal.

(11) The charging apparatus according to any one of (6) to (10), in which
the second switching switch is a voltage adjustment element that adjusts a voltage of the power.

(12) The charging apparatus according to (11), in which
the voltage adjustment element is a linear regulator that adjusts a voltage of the storage capacitor to apply the adjusted voltage to the power storing element.

(13) The charging apparatus according to (11), in which
the voltage adjustment element is a voltage boosting converter that boosts a voltage of the storage capacitor to apply the boosted voltage to the power storing element.

(14) The charging apparatus according to (13), in which

the power storage includes a storage capacitor that stores therein the output from the rectifier circuit, the storage capacitor being connected to the voltage boosting converter, and

capacitance of the storage capacitor is set such that the storage capacitor is capable of storing therein at least three times more power, compared to power consumed by the voltage boosting converter.

(15) The charging apparatus according to any one of (11) to (14), in which
at least one of the voltage adjustment element or the charge controller is driven using the output from the rectifier circuit as a power supply.

(16) The charging apparatus according to (1), in which

the power storage includes a first storage capacitor, a second storage capacitor, a third switching switch, and a fourth switching switch, each of the first and second storage capacitors storing therein the output from the rectifier circuit, the third switching switch performing switching on the first and second storage capacitors to connect one of the first and second storage capacitors to the rectifier circuit, the fourth switching switch performing switching on the first and second storage capacitors to connect one of the first and second storage capacitors to the power storing element, and

the charge controller controls the third and fourth switching switches such that the second storage capacitor is charged while the first storage capacitor is supplying power to the power storing element.

(17) The charging apparatus according to (16), in which the charge controller

controls the third and fourth switching switches such that, when a voltage of the first storage capacitor exceeds a threshold voltage, the power storing element and the first storage capacitor are connected to each other and the rectifier circuit and the second storage capacitor are connected to each other, and

controls the third and fourth switching switches such that, when the voltage of the first storage capacitor is less than the threshold voltage, the power storing element and the second storage capacitor are connected to each other and the rectifier circuit and the first storage capacitor are connected to each other.

(18) The charging apparatus according to (16) or (17), in which

the charge controller outputs a control signal used to control the third and fourth switching switches, and the power storage includes a first adjustment capacitor and a second adjustment capacitor, the first adjustment capacitor being charged by the control signal input to the third switching switch, the second adjustment capacitor being charged by the control signal input to the fourth switching switch.

(19) The charging apparatus according to (18), in which capacitance of the first adjustment capacitor and capacitance of the second adjustment capacitor are set such that the third switching switch performs switching earlier than the fourth switching switch.
(20) The charging apparatus according to any one of (1) to (19), in which the power storage includes a backflow prevention diode that is provided between the rectifier circuit and the power storing element, the backflow prevention diode preventing backflow of current coming from the power storing element.
(21) The charging apparatus according to any one of (1) to (20), in which the charge controller exhibits an internal resistance greater than or equal to 2 MΩ.

Reference Signs List

1 target
2 human body
3 metallic body
4 earth ground
22, 222, 322, 422 antenna section
23, 223, 323, 423 rectifier circuit
24, 224, 324, 424 power storage
25, 225, 325, 425 power storing element
26, 226, 326, 426 charge controller
31 first antenna conductor
32 second antenna conductor
40 conductor electrode
44 substrate ground
80, 280, 380, 480a, 480b backflow prevention diode
281 linear regulator
381, 481 voltage boosting DC/DC converter
282, 382, 482a, 482b storage capacitor
283, 383, 483a, 483b adjustment capacitor
SW1 first switching switch
SW2 second switching switch
SW3 third switching switch
SW4 fourth switching switch
100, 100a, 100b, 110, 200, 300, 400 charging apparatus
500, 500a, 500b, 500c, 501, 600, 700 harvester apparatus

## Claims

1. A charging apparatus, comprising:

   a dipole-structure antenna section that includes a first antenna conductor and a second antenna conductor that is a conductor different from the first antenna conductor, the first antenna conductor being electrically coupled to a target including a metallic body or a human body, the second antenna conductor not being connected to the target;
   a rectifier circuit that rectifies output from the antenna section;
   a power storage that generates power on a basis of output from the rectifier circuit and charges a power storing element with the power; and
a charge controller that controls an operation of the power storage according to a voltage level of the power.

2. The charging apparatus according to claim 1, wherein
the power storage includes a first switching switch that is arranged between the rectifier circuit and the power storing element, the first switching switch switching between an on state and an off state with respect to connection between the rectifier circuit and the power storing element.

3. The charging apparatus according to claim 2, wherein
the charge controller detects an output voltage of the rectifier circuit as the voltage level of the power, and performs switching to turn on or off the first switching switch according to a result of the detection.

4. The charging apparatus according to claim 3, wherein
the charge controller turns off the first switching switch when the output voltage of the rectifier circuit exceeds a threshold voltage for the first switching switch.

5. The charging apparatus according to claim 2, wherein
the first switching switch is a MOSFET or a load switch.

6. The charging apparatus according to claim 1, wherein
the power storage includes a second switching switch that controls supply of the power to the power storing element.

7. The charging apparatus according to claim 6, wherein

the power storage includes a storage capacitor that stores therein the output from the rectifier circuit, the storage capacitor being connected to the second switching switch, and
the charge controller detects a voltage of the storage capacitor as the voltage level of the power, and performs switching to turn on or off the second switching switch according to a result of the detection.

8. The charging apparatus according to claim 7, wherein
the charge controller turns on the second switching switch when the voltage of the storage capacitor exceeds a threshold voltage for the second switching switch.

9. The charging apparatus according to claim 6, wherein

the charge controller outputs a control signal used to turn on the second switching switch, and
the power storage includes an adjustment capacitor that is charged by the control signal.

10. The charging apparatus according to claim 9, wherein

the second switching switch includes a control terminal to which the control signal is input, and
capacitance of the adjustment capacitor is set such that, until a voltage of the storage capacitor decreases up to a specified voltage, a voltage state at the control terminal is equivalent to the voltage state at the control terminal at the time of input of the control signal to the control terminal.

11. The charging apparatus according to claim 6, wherein
the second switching switch is a voltage adjustment element that adjusts a voltage of the power.

12. The charging apparatus according to claim 11, wherein
the voltage adjustment element is a linear regulator that adjusts a voltage of the storage capacitor to apply the adjusted voltage to the power storing element.

13. The charging apparatus according to claim 11, wherein
the voltage adjustment element is a voltage boosting converter that boosts a voltage of the storage capacitor to apply the boosted voltage to the power storing element.

14. The charging apparatus according to claim 13, wherein

the power storage includes a storage capacitor that stores therein the output from the rectifier circuit, the storage capacitor being connected to the voltage boosting converter, and

capacitance of the storage capacitor is set such that the storage capacitor is capable of storing therein at least three times more power, compared to power consumed by the voltage boosting converter.

**15.** The charging apparatus according to claim 11, wherein
at least one of the voltage adjustment element or the charge controller is driven using the output from the rectifier circuit as a power supply.

**16.** The charging apparatus according to claim 1, wherein

the power storage includes a first storage capacitor, a second storage capacitor, a third switching switch, and a fourth switching switch, each of the first and second storage capacitors storing therein the output from the rectifier circuit, the third switching switch performing switching on the first and second storage capacitors to connect one of the first and second storage capacitors to the rectifier circuit, the fourth switching switch performing switching on the first and second storage capacitors to connect one of the first and second storage capacitors to the power storing element, and

the charge controller controls the third and fourth switching switches such that the second storage capacitor is charged while the first storage capacitor is supplying power to the power storing element.

**17.** The charging apparatus according to claim 16, wherein
the charge controller

controls the third and fourth switching switches such that, when a voltage of the first storage capacitor exceeds a threshold voltage, the power storing element and the first storage capacitor are connected to each other and the rectifier circuit and the second storage capacitor are connected to each other, and

controls the third and fourth switching switches such that, when the voltage of the first storage capacitor is less than the threshold voltage, the power storing element and the second storage capacitor are connected to each other and the rectifier circuit and the first storage capacitor are connected to each other.

**18.** The charging apparatus according to claim 16, wherein

the charge controller outputs a control signal used to control the third and fourth switching switches, and
the power storage includes a first adjustment capacitor and a second adjustment capacitor, the first adjustment capacitor being charged by the control signal input to the third switching switch, the second adjustment capacitor being charged by the control signal input to the fourth switching switch.

**19.** The charging apparatus according to claim 18, wherein
capacitance of the first adjustment capacitor and capacitance of the second adjustment capacitor are set such that the third switching switch performs switching earlier than the fourth switching switch.

**20.** The charging apparatus according to claim 1, wherein
the power storage includes a backflow prevention diode that is provided between the rectifier circuit and the power storing element, the backflow prevention diode preventing backflow of current coming from the power storing element.

**21.** The charging apparatus according to claim 1, wherein
the charge controller exhibits an internal resistance greater than or equal to 2 MΩ.

FIG.1

FIG.2

FIG.3

FIG.4

FIG.5

22

23

70

40
(31)

68a

68c

47a

47b

68b

68d

69a

69b

71a

44
(32)

71b

# FIG.6

1(2,3)

31(40)

22

32(44)

100(21)

# FIG.7

A

1(2)

100a(21)

4

B

1(3)

100b(21)

4

66

# FIG.8

22     23     24     SW1     25

| Antenna section | Rectifier circuit | First switching switch | Power storing element |

Charge controller

Load

100

26     27

# FIG.9

FIG.10

EP 4 380 004 A1

FIG.11

FIG.12

222 223 224 282 281 225

| | | | | |
|---|---|---|---|---|
| Antenna section | Rectifier circuit | Storage capacitor | Linear regulator SW2 | Power storing element |

Charge controller

Load

200

226 227

# FIG.13

FIG.14

EP 4 380 004 A1

FIG.15

FIG.16

FIG.17

FIG.18

FIG.19

EP 4 380 004 A1

FIG.20

FIG.21

EP 4 380 004 A1

FIG.22

FIG.23

FIG.24

| Direct-current resistance value[Ω] | Detected voltage[V] |
|---|---|
| 1k | 0.60 |
| 10k | 2.00 |
| 47k | 4.60 |
| 100k | 6.55 |
| 200k | 6.75 |
| 470k | 6.77 |
| 1M | 6.77 |
| ∞ | 6.77 |

FIG.25

FIG.26

95(31)

94

96

94

90

610    47a    620    47b

600

630

632

632

631

FIG.27

97

98  98  99

700

90

101

47b    47a

FIG.28

FIG.29

EP 4 380 004 A1

## INTERNATIONAL SEARCH REPORT

| International application No. |
| --- |
| **PCT/JP2022/016476** |

**A.     CLASSIFICATION OF SUBJECT MATTER**

*H02J 50/05*(2016.01)i; *H02J 7/00*(2006.01)i

FI:     H02J7/00 301D; H02J7/00 B; H02J7/00 303A; H02J50/05

According to International Patent Classification (IPC) or to both national classification and IPC

**B.     FIELDS SEARCHED**

Minimum documentation searched (classification system followed by classification symbols)

H02J50/05; H02J7/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.     DOCUMENTS CONSIDERED TO BE RELEVANT**

| Category* | Citation of document, with indication, where appropriate, of the relevant passages | Relevant to claim No. |
| --- | --- | --- |
| X | JP 2003-88005 A (SEIKO INSTRUMENTS INC) 20 March 2003 (2003-03-20) paragraphs [0022]-[0108], fig. 1-30 | 1, 20-21 |
| Y | | 1-15, 20-21 |
| A | | 16-19 |
| Y | JP 2016-63693 A (PANASONIC IP MAN CORP) 25 April 2016 (2016-04-25) paragraphs [0011], [0018]-[0019], [0033]-[0036], [0046], [0051], [0064]-[0065], fig. 1 | 2-15 |
| Y | WO 2017/081878 A1 (TATEYAMA KAGAKU IND CO LTD) 18 May 2017 (2017-05-18) paragraphs [0006]-[0007], [0021]-[0023], fig. 1 | 9-10 |
| Y | JP 2014-183728 A (NISSIN ELECTRIC CO LTD) 29 September 2014 (2014-09-29) paragraphs [0020]-[0051], fig. 1-8 | 1-15, 20-21 |
| A | | 16-19 |

☐ Further documents are listed in the continuation of Box C.          ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **31 May 2022** | **14 June 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2022/016476**

| Patent document cited in search report | | | Publication date (day/month/year) | Patent family member(s) | | | Publication date (day/month/year) |
|---|---|---|---|---|---|---|---|
| JP | 2003-88005 | A | 20 March 2003 | US paragraphs [0090]-[0189], fig. 1-30 EP | 2002/0190689 1263114 | A1 A2 | |
| JP | 2016-63693 | A | 25 April 2016 | EP paragraphs [0012], [0019]-[0020], [0063], [0068], [0083]-[0084], fig. 1 CN | 3197016 106063078 | A1 A | |
| WO | 2017/081878 | A1 | 18 May 2017 | (Family: none) | | | |
| JP | 2014-183728 | A | 29 September 2014 | (Family: none) | | | |

Form PCT/ISA/210 (patent family annex) (January 2015)

**REFERENCES CITED IN THE DESCRIPTION**

**Patent documents cited in the description**

- JP 2013038941 A